(19) Europäisches Patentamt / European Patent Office / Office européen des brevets

(11) **EP 3 858 611 A1**

(12) **EUROPEAN PATENT APPLICATION**
published in accordance with Art. 153(4) EPC

(43) Date of publication:
04.08.2021 Bulletin 2021/31

(51) Int Cl.:
**B32B 27/30** (2006.01)  **B32B 3/30** (2006.01)
**B32B 7/023** (2019.01)  **B32B 27/22** (2006.01)
**C03C 27/12** (2006.01)  **G02B 27/01** (2006.01)

(21) Application number: 19864969.1

(22) Date of filing: 26.09.2019

(86) International application number:
**PCT/JP2019/037961**

(87) International publication number:
**WO 2020/067338 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 26.09.2018 JP 2018181056

(71) Applicant: Kuraray Co., Ltd.
Kurashiki-shi, Okayama 710-0801 (JP)

(72) Inventors:
• **TAKASUKA, Yuuki**
**Tokyo 100-8115 (JP)**
• **NAGASAWA, Atsushi**
**Kamisu-shi, Ibaraki 314-0197 (JP)**
• **YASUDA, Hirotaka**
**Kurashiki-shi, Okayama 713-8550 (JP)**
• **ISOUE, Koichiro**
**Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **INTERMEDIATE LAMINATE, METHOD FOR MANUFACTURING SAME, LAMINATE, AND GLAZING MATERIAL**

(57) The present invention provides an intermediate laminate that is suitably used in laminates such as laminated glass, can be provided with various functions by a simple method, has a high degree of freedom of design of the functions to be imparted, and has good transmission visibility, and a laminate comprising the same. The intermediate laminate (5A) of the present invention comprises a first adhesive layer (11) and a first cross-linked cured resin layer (12) laminated directly with no other layer interposed therebetween, and the first adhesive layer (11) comprises a polyvinyl acetal resin and/or an ionomer resin. The first cross-linked cured resin layer (12) preferably has a fine concave and convex pattern on a surface on the side opposite to the first adhesive layer (11) side. A laminate (6A) comprises the intermediate laminate (5A) and a pair of translucent base materials (21 and 22) holding the intermediate laminate (5A) therebetween.

Fig. 6B

Printed by Jouve, 75001 PARIS (FR)

EP 3 858 611 A1

## Description

### Technical Field

The present invention relates to a laminate that is suitably used in glazing materials, etc., an intermediate laminate that is suitably used in this laminate and a method for producing the same.

### Background Art

Laminated glass composed of a pair of glass plates laminated with an adhesive layer, generally called an intermediate film, interposed therebetween is neither susceptible to breakage nor, even if broken, scatters glass fragments, and is thus utilized for various purposes because of excellent security and safety. Studies are underway to further impart various functions thereto.

Patent Literature 1 discloses laminated glass (laminate of glass plate/adhesive layer (intermediate film)/fine through-hole film/adhesive layer (intermediate film)/glass plate) having a light-blocking function imparted by sandwiching a fine concave and convex pattern film (fine through-hole film) obtained through the photolithographic processing of a photosensitive resin between a pair of glass plates (section [Examples]).

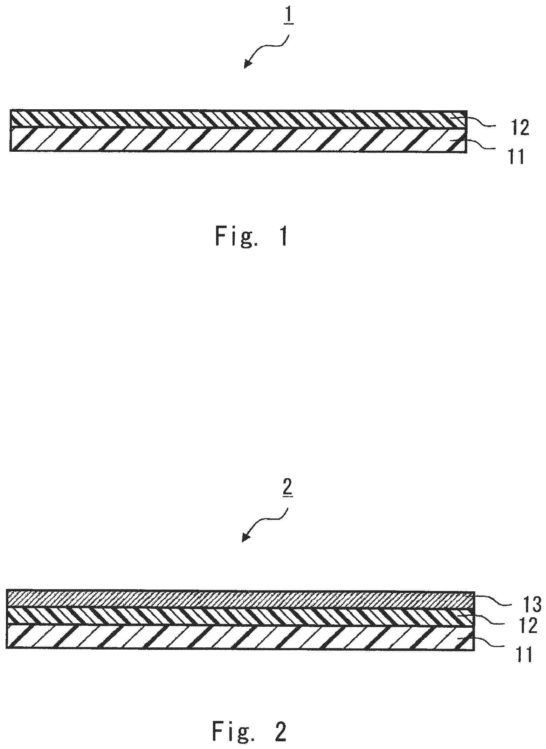

Patent Literature 2 discloses a heat shield film with a hologram constituted by a transparent film, a hologram layer with a fine concave and convex, a light reflection layer, and a pressure sensitive adhesive layer, and laminated glass having a heat shield function and a hologram function imparted using the same (claim 1 and Fig. 2).

Patent Literature 3 discloses a method for producing laminated glass (laminate of glass plate/adhesive layer (intermediate film)/conductive structure/adhesive layer (intermediate film)/glass plate) having a conductive structure as a functional layer using a sheet having the conductive structure on a polyvinyl acetal resin sheet as a material for the intermediate film (claim 1 and paragraph 0001).

### Citation List

### Patent Literature

Patent Literature 1: Japanese Unexamined Patent Application Publication No. S60-191816
Patent Literature 2: Japanese Unexamined Patent Application Publication No. 2013-171099
Patent Literature 3: International Patent Publication No. WO 2015/078993 (Published Japanese Translation of PCT International Publication for Patent Application, No. 2016-539905)

### Summary of Invention

### Technical Problem

In a technique described in Patent Literature 1, a fine concave and convex pattern film (fine through-hole film) requires a complicated production process and also high production cost because the fine concave and convex pattern film is produced as a single body by used of lithographic processing. Furthermore, this technique has a low degree of freedom of pattern design change and is significantly limited by functions that can be imparted.

Patent Literatures 2 and 3 each disclose laminated glass comprising a hologram layer or a conductive structure as a functional layer and however, have no mention about the imparting of other functions.

The technique described in Patent Literature 2 employs polyethylene terephthalate (PET) or polyethylene naphthalate as a transparent film (claim 1). A hologram layer with a fine concave and convex is formed on a transparent film having a refractive index largely different from that of a pressure sensitive adhesive layer. Then, this intermediate laminate is sandwiched between a pair of pressure sensitive adhesive layers and a pair of glass plates. This laminated glass has poor transmission visibility because the edges of the transparent film are clearly visible as dark lines.

The present invention has been made in light of these circumstances. An object of the present invention is to provide an intermediate laminate that is suitably used in laminates such as laminated glass, can be provided with various functions by a simple method, has a high degree of freedom of design of the functions to be imparted, and has good transmission visibility, and a method for producing the same.

**Solution to Problem**

The present inventors have conducted studies to attain the object described above, and consequently completed the present invention which encompasses the following aspects.

[1] An intermediate laminate comprising a first adhesive layer and a first cross-linked cured resin layer laminated directly with no other layer interposed therebetween,
the first adhesive layer comprising a polyvinyl acetal resin and/or an ionomer resin.
[2] The intermediate laminate according to [1], wherein the first adhesive layer comprises a polyvinyl acetal resin and more than 0% by mass and less than 20% by mass of a plasticizer.
[3] The intermediate laminate according to [1] or [2], wherein the first adhesive layer comprises a polyvinyl acetal resin having a viscosity of more than 200 mPa·s measured under conditions of 20°C and 30 rpm using a Brookfield (type B) viscometer as to a solution adjusted to 10% by mass using a mixed solvent of toluene and ethanol mixed at a mass ratio of 1:1 as a solvent.
[4] The intermediate laminate according to any of [1] to [3], wherein the first adhesive layer comprises a polyvinyl acetal resin having a hydroxy group content of 6 to 26% by mass.
[5] The intermediate laminate according to any of [1] to [4], wherein a resin constituting the first cross-linked cured resin layer comprises a cured product of an active energy ray curable composition.
[6] The intermediate laminate according to any of [1] to [5], wherein the first cross-linked cured resin layer has a fine concave and convex pattern on a surface on the side opposite to the first adhesive layer side.
[7] The intermediate laminate according to [6], wherein the fine concave and convex pattern comprises a periodic pattern having a pattern pitch within a range of 10 to 500 μm.
[8] The intermediate laminate according to [6], wherein the fine concave and convex pattern is a lens pattern comprising one or more Fresnel lens-shaped or microlens-shaped convex portions.
[9] The intermediate laminate according to any of [1] to [8], wherein refractive indexes, measured in accordance with JIS7142, of a resin constituting the first adhesive layer and a resin constituting the first cross-linked cured resin layer satisfy the following expression (1):

$$|n(A) - n(B)| \leq 0.05 \ldots \text{Expression (1)},$$

wherein n(A) represents the refractive index of the resin constituting the first adhesive layer, and n(B) represents the refractive index of the resin constituting the first cross-linked cured resin layer.
[10] The intermediate laminate according to any of [1] to [9], wherein a thickness of the first adhesive layer is 10 to 450 μm.
[11] The intermediate laminate according to any of [1] to [10], further comprising a light reflection layer on the first cross-linked cured resin layer, the light reflection layer reflecting at least a portion of light.
[12] The intermediate laminate according to [11], wherein the light reflection layer consists of one or two or more dielectric layers.
[13] The intermediate laminate according to [12], wherein the light reflection layer has a dielectric layer thickness of 3 to 200 nm and a total thickness of 6 to 2000 nm.
[14] The intermediate laminate according to any of [1] to [10], further comprising a second cross-linked cured resin layer on the first cross-linked cured resin layer.
[15] The intermediate laminate according to any of [11] to [13], further comprising a second cross-linked cured resin layer on the light reflection layer.
[16] The intermediate laminate according to [14] or [15], wherein a resin constituting the second cross-linked cured resin layer comprises a cured product of an active energy ray curable composition.
[17] The intermediate laminate according to any of [14] to [16], wherein refractive indexes, measured in accordance with JIS7142, of a resin constituting the first cross-linked cured resin layer and a resin constituting the second cross-linked cured resin layer satisfy the following expression (2):

$$|n(D) - n(B)| \leq 0.05 \ldots \text{Expression (2)},$$

wherein n(B) represents the refractive index of the resin constituting the first cross-linked cured resin layer, and n(D) represents the refractive index of the resin constituting the second cross-linked cured resin layer.
[18] The intermediate laminate according to any of [1] to [17], further comprising a second adhesive layer on a surface of the intermediate laminate on the side opposite to the first adhesive layer side,

the second adhesive layer comprising a combination of a polyvinyl acetal resin and 20% by mass or more of a plasticizer, and/or an ionomer resin.

[19] The intermediate laminate according to [18], wherein the second adhesive layer comprises a polyvinyl acetal resin having a hydroxy group content of 6 to 26% by mass.

[20] A laminate comprising an intermediate laminate according to [18] or [19] and a pair of translucent base materials holding the intermediate laminate therebetween.

[21] The laminate according to [20], wherein an ultraviolet transmittance is 20% or less.

[22] The laminate according to [20] or [21], wherein the translucent base material is a glass base material or a translucent resin base material.

[23] A glazing material comprising a laminate according to any of [20] to [22].

[24] The glazing material according to [23] for combiners for head-up displays.

[25] A method for producing an intermediate laminate according to [6], comprising the steps of:

providing a resin film as the first adhesive layer (S1);
coating the resin film with a cross-linkable curable composition (S2);
impressing a mold having an inverted pattern of a fine concave and convex pattern to be imparted on a surface of a coating layer comprising the cross-linkable curable composition (S3);
cross-linking and curing the coating layer to form the first cross-linked cured resin layer (S4); and
removing an intermediate laminate comprising the first adhesive layer and the first cross-linked cured resin layer from the mold (S5).

**Advantageous Effects of Invention**

The present invention can provide an intermediate laminate that is suitably used in laminates such as laminated glass, can be provided with various functions by a simple method, has a high degree of freedom of design of the functions to be imparted, and has good transmission visibility, and a method for producing the same.

**Brief Description of the Drawings**

[Fig. 1] Fig. 1 is a schematic cross-sectional view of an intermediate laminate of the first embodiment according to the present invention.
[Fig. 2] Fig. 2 is a schematic cross-sectional view of an intermediate laminate of the second embodiment according to the present invention.
[Fig. 3] Fig. 3 is a schematic cross-sectional view of an intermediate laminate of the third embodiment according to the present invention.
[Fig. 4] Fig. 4 is a schematic cross-sectional view of an intermediate laminate of the fourth embodiment according to the present invention.
[Fig. 5A] Fig. 5A is a schematic cross-sectional view of an intermediate laminate of the fifth embodiment according to the present invention.
[Fig. 5B] Fig. 5B is a schematic cross-sectional view showing a modified design example of the intermediate laminate of the fifth embodiment.
[Fig. 6A] Fig. 6A is a schematic cross-sectional view of a laminate of the first embodiment according to the present invention.
[Fig. 6B] Fig. 6B is a schematic cross-sectional view showing a modified design example of the laminate of the first embodiment.

**Description of Embodiments**

The intermediate laminate of the present invention is suitably used in laminates, such as laminated glass, having a structure where one or more layers are held between a pair of translucent base materials. In such a laminate, the intermediate laminate of the present invention is arranged between the pair of translucent base materials.

The intermediate laminate of the present invention comprises a first adhesive layer and a first cross-linked cured resin layer laminated directly with no other layer interposed therebetween.

The laminate of the present invention comprises the intermediate laminate of the present invention described above and a pair of translucent base materials holding this intermediate laminate therebetween. The translucent base material is preferably a glass base material or a translucent resin base material. When both of the pair of translucent base materials are glass base materials, the laminate of the present invention is laminated glass.

The structures of intermediate laminates of embodiments according to the present invention and laminates comprising these intermediate laminates will be described with reference to the drawings. All the drawings are schematic cross-sectional views, and the same components are given the same reference signs.

Intermediate laminate 1 of the first embodiment shown in Fig. 1 has a two-layer structure of first adhesive layer 11 and first cross-linked cured resin layer 12 laminated directly with no other layer interposed therebetween.

Intermediate laminate 2 of the second embodiment shown in Fig. 2 has first adhesive layer 11 and first cross-linked cured resin layer 12 laminated directly with no other layer interposed therebetween, and further has functional layer 13 on a surface of the first cross-linked cured resin layer 12 on the side opposite to the first adhesive layer 11 side.

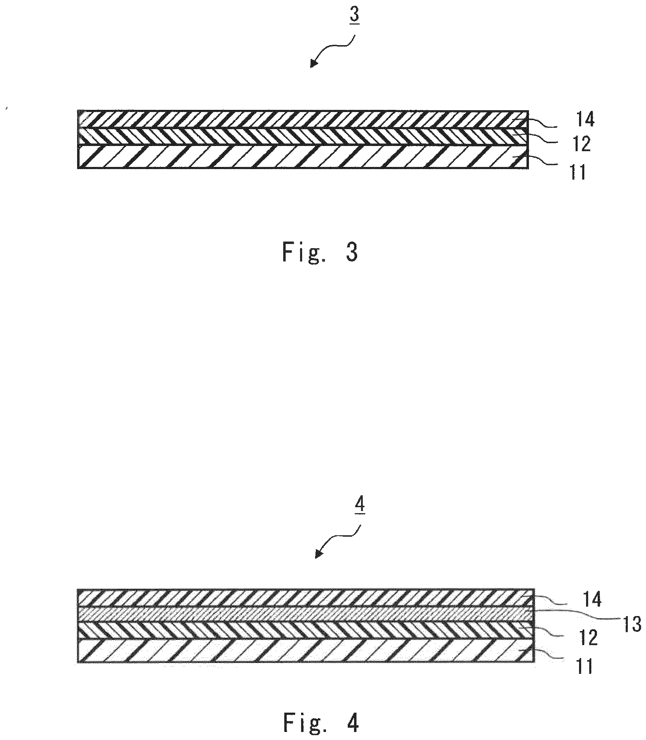

Intermediate laminate 3 of the third embodiment shown in Fig. 3 has first adhesive layer 11 and first cross-linked cured resin layer 12 laminated directly with no other layer interposed therebetween, and further has second cross-linked cured resin layer 14 on a surface of the first cross-linked cured resin layer 12 on the side opposite to the first adhesive layer 11 side.

Intermediate laminate 4 of the fourth embodiment shown in Fig. 4 has first adhesive layer 11 and first cross-linked cured resin layer 12 laminated directly with no other layer interposed therebetween, and further has functional layer 13 and second cross-linked cured resin layer 14 in this order on a surface of the first cross-linked cured resin layer 12 on the side opposite to the first adhesive layer 11 side.

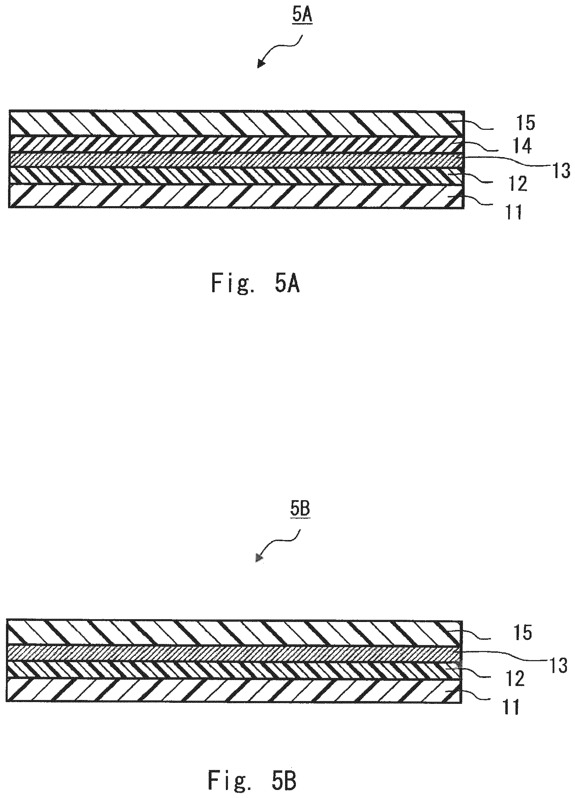

Intermediate laminate 5A of the fifth embodiment shown in Fig. 5A has first adhesive layer 11 and first cross-linked cured resin layer 12 laminated directly with no other layer interposed therebetween, and further has functional layer 13, second cross-linked cured resin layer 14, and second adhesive layer 15 in this order on a surface of the first cross-linked cured resin layer 12 on the side opposite to the first adhesive layer 11 side.

The intermediate laminate 5A of the fifth embodiment may lack the second cross-linked cured resin layer 14. Specifically, the design of the intermediate laminate 5A may be changed to intermediate laminate 5B, as shown in Fig. 5B, which has first adhesive layer 11 and first cross-linked cured resin layer 12 laminated directly with no other layer interposed therebetween, and further has functional layer 13 and second adhesive layer 15 in this order on a surface of the first cross-linked cured resin layer 12 on the side opposite to the first adhesive layer 11 side.

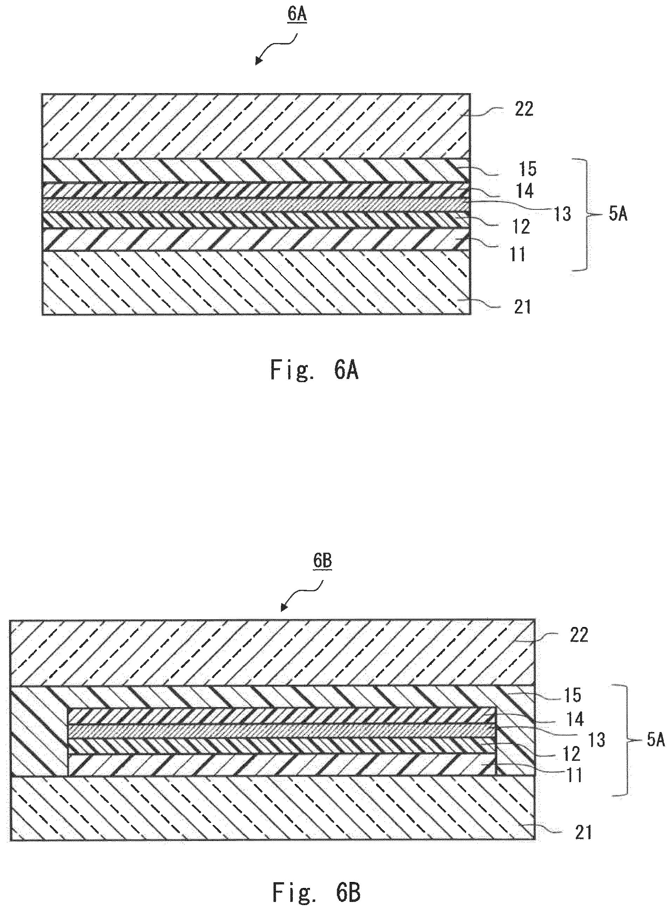

Laminate 6A of the first embodiment shown in Fig. 6A consists of the intermediate laminate 5A of the fifth embodiment and a pair of translucent base materials 21 and 22 holding this intermediate laminate therebetween. In this laminate 6A, at least the first cross-linked cured resin layer 12 can be present between the first adhesive layer 11 and the second adhesive layer 15, and the design of other layers can be appropriately changed.

Fig. 6A shows all the factors having the same planar sizes. However, as in laminate 6B of a modified design example shown in Fig. 6B, the planar sizes of first adhesive layer 11, first cross-linked cured resin layer 12, optionally disposed functional layer 13, and optionally disposed second cross-linked cured resin layer 14 may be designed so as to be smaller than those of second adhesive layer 15 and a pair of translucent base materials 21 and 22. For the structure shown in Fig. 6B, it is preferred that the edges of a layer having a planar size smaller than those of second adhesive layer 15 and a pair of translucent base materials 21 and 22 should not be visible as dark lines.

In these embodiments, the first cross-linked cured resin layer 12 can have a fine concave and convex pattern on a surface on the side opposite to the first adhesive layer 11 side. In such an aspect, the first cross-linked cured resin layer 12 can serve as a functional layer that imparts various functions such as optical functions (e.g., a light gathering function and a light diffusion function) to a laminate, such as laminated glass, obtained using the intermediate laminate of the present invention.

The functional layer 13 is a layer having an arbitrary function. When the first cross-linked cured resin layer 12 is a functional layer, the functional layer 13 can be a functional layer having a function different from that of the first cross-linked cured resin layer 12.

[Intermediate laminate]

(First adhesive layer)

The first adhesive layer (11) is a layer capable of allowing a translucent base material and a layer laminated on the first adhesive layer to adhere to each other. A resin film or the like for intermediate films of laminated glass is preferably used as a material therefor.

The resin constituting the first adhesive layer preferably comprises a polyvinyl acetal resin and/or an ionomer resin from the viewpoint of adhesiveness, the transmission visibility of a laminate such as laminated glass, weather resistance, strength such as bending strength, and penetration resistance. Particularly, when the size of the second adhesive layer is larger than that of the first adhesive layer, the resin preferably comprises a polyvinyl acetal resin and/or an ionomer resin.

Polyethylene terephthalate (PET) and polyethylene naphthalate listed as materials for transparent films in Patent Literature 2 mentioned in the section [Background Art] are not preferred as the resin constituting the first adhesive layer because, in a laminate such as laminated glass, particularly, when the size of the second adhesive layer is larger than that of the first adhesive layer, the edges of the resulting layer are clearly visible as dark lines, resulting in deteriorated transmission visibility.

The first adhesive layer can optionally comprise a plasticizer.

<Polyvinyl acetal resin>

Hereinafter, an aspect of the first adhesive layer comprising a polyvinyl acetal resin will be described.

The first adhesive layer may comprise two or more polyvinyl acetal resins differing in at least one of properties, i.e., a viscosity average degree of polymerization, a degree of acetalization, an acetyl group content, a hydroxy group content, an ethylene content, a molecular weight of aldehyde used in acetalization, and a chain length. In this case, the first adhesive layer preferably comprises two or more polyvinyl acetal resins differing in viscosity average degree of polymerization, or two or more acetalization products of polyvinyl alcohols differing in viscosity average degree of polymerization, from the viewpoint of easy melt moldability and from the viewpoint of preventing the deformation of a fine concave and convex pattern at the time of production of a laminate such as laminated glass and the misalignment of a translucent base material when a laminate such as laminated glass is used, particularly, at high temperatures.

The polyvinyl acetal resin can be produced by a known method and can be produced by, for example, the following method.

First, an aqueous solution of polyvinyl alcohol and/or an ethylene-vinyl alcohol copolymer having a concentration of 3 to 30% by mass is kept in a temperature range of 80 to 100°C and then gradually cooled over 10 to 60 minutes. At the temperature decreased to -10 to 30°C, an aldehyde and/or ketone compound and an acid catalyst are added thereto. While the temperature is kept constant, acetalization reaction is performed for 30 to 300 minutes. Next, the reaction solution is warmed to a temperature of 20 to 80°C over 30 to 200 minutes and kept for 30 to 300 minutes. Next, the reaction solution is filtered, if necessary, and then neutralized with a neutralizing agent such as an alkali. Next, the obtained resin is filtered, washed with water, and dried. In this way, the polyvinyl acetal resin is produced.

The acid catalyst for use in the acetalization reaction is not particularly limited and can be any of an organic acid and an inorganic acid. Examples of the acid catalyst include acetic acid, p-toluenesulfonic acid, nitric acid, sulfuric acid, and hydrochloric acid. Among them, hydrochloric acid, sulfuric acid, and nitric acid, etc. are preferred from the viewpoint of acid strength and easy removal by washing.

The aldehyde or ketone compound for use in the production of the polyvinyl acetal resin preferably has a linear, branched, or cyclic molecular structure, more preferably a linear or branched molecular structure, having 2 to 10 carbon atoms from the viewpoint of easily obtaining a polyvinyl acetal resin having suitable rupture energy. A corresponding linear or branched acetal group is thereby obtained.

One or two or more aldehyde and/or ketone compounds can be used. At least one of them is preferably one or more aliphatic nonbranched aldehydes having 2 to 10 carbon atoms. Such aldehyde is preferably n-butyraldehyde or the like from the viewpoint of easily obtaining a polyvinyl acetal resin having suitable rupture energy. The amount of the n-butyraldehyde in one or more aldehyde and/or ketone compounds for use in the acetalization is preferably 50% by mass or more, more preferably 80% by mass or more, particularly preferably 95% by mass or more, most preferably 99% by mass or more, and may be 100% by mass.

A combination of a plurality of polyvinyl alcohols and/or ethylene-vinyl alcohol copolymers differing in property such as a viscosity average degree of polymerization or a degree of hydrolysis may be used in the production of the polyvinyl acetal resin.

The viscosity average degree of polymerization of the starting material polyvinyl alcohol is not particularly limited and is preferably 100 or more, more preferably 300 or more, more preferably 400 or more, further preferably 600 or more, particularly preferably 700 or more, most preferably 750 or more. When the viscosity average degree of polymerization of the polyvinyl alcohol is equal to or more than the lower limit value described above, the misalignment of a translucent base material at high temperatures is easily suppressed in the resulting laminate such as laminated glass.

The viscosity average degree of polymerization of the polyvinyl alcohol is preferably 5000 or less, more preferably 3000 or less, further preferably 2500 or less, particularly preferably 2300 or less, most preferably 2000 or less. When the viscosity average degree of polymerization of the polyvinyl alcohol is equal to or less than the upper limit value described above, the polyvinyl acetal resin has good film formability.

The viscosity average degree of polymerization of the polyvinyl alcohol can be measured in accordance with, for example, JIS K 6726 "Testing methods for polyvinyl alcohol".

Usually, the viscosity average degree of polymerization of the polyvinyl acetal resin is identical with the viscosity average degree of polymerization of the starting material polyvinyl alcohol. Therefore, the preferred viscosity average degree of polymerization of the polyvinyl alcohol described above is identical with a preferred viscosity average degree of polymerization of the resulting polyvinyl acetal resin. When the first adhesive layer comprises two or more polyvinyl acetal resins, the viscosity average degree of polymerization of at least one of the polyvinyl acetal resins is preferably equal to or more than the lower limit value described above and equal to or less than the upper limit value described above.

The acetyl group content of the polyvinyl acetal resin can be adjusted by appropriately adjusting the degree of saponification of the starting material polyvinyl alcohol and/or ethylene-vinyl alcohol copolymer. The polarity of the polyvinyl acetal resin varies depending on the acetyl group content. Compatibility with an optionally added plasticizer and the mechanical strength of the resulting first adhesive layer can thereby be adjusted.

The acetyl group content in the polyvinyl acetal resin is preferably 0.1 to 20% by mol, more preferably 0.5 to 3% by mol, particularly preferably 5 to 8% by mol, with respect to the ethylene unit of the polyvinyl acetal backbone. The acetyl group content can be adjusted to within the range described above by appropriately adjusting the degree of saponification of the starting material polyvinyl alcohol.

When the first adhesive layer comprises a polyvinyl acetal resin having an acetyl group content that falls within the range described above, good adhesiveness and reduction in optical strain, etc. are easily achieved.

When the first adhesive layer comprises two or more polyvinyl acetal resins, the acetyl group content of at least one of the polyvinyl acetal resins preferably falls within the range described above.

The degree of acetalization of the polyvinyl acetal resin is not particularly limited and is preferably 40 to 86% by mol, more preferably 45 to 84% by mol, further preferably 50 to 82% by mol, particularly preferably 60 to 82% by mol, most preferably 68 to 82% by mol. The degree of acetalization of the polyvinyl acetal resin can be adjusted to within the range described above by appropriately adjusting the amount of the aldehyde and/or ketone compound used in the acetalization of polyvinyl alcohol resin. When the degree of acetalization falls within the range described above, the polyvinyl acetal resin has good mechanical strength and compatibility with an optionally added plasticizer. When the first adhesive layer comprises two or more polyvinyl acetal resins, the degree of acetalization of at least one of the polyvinyl acetal resins preferably falls within the range described above.

The hydroxy group content (residual hydroxy group content after acetal modification) of the polyvinyl acetal resin is not particularly limited and is preferably 6 to 26% by mass, more preferably 12 to 24% by mass, particularly preferably 15 to 22% by mass, most preferably 18 to 21% by mass, with respect to the ethylene unit of the polyvinyl acetal backbone. When sound insulation performance is to be imparted to the first adhesive layer, the hydroxy group content is preferably 6 to 20% by mass, more preferably 8 to 18% by mass, particularly preferably 10 to 15% by mass, most preferably 11 to 13% by mass.

The hydroxy group content can be adjusted to within the range described above by adjusting the amount of the aldehyde used in the acetalization of polyvinyl alcohol resin. When the hydroxy group content falls within the range described above, a laminate, such as laminated glass, having less optical unevenness is easily obtained because of small refractive index difference from the second adhesive layer. When the first adhesive layer comprises two or more polyvinyl acetal resins, the hydroxy group content of at least one of the polyvinyl acetal resins preferably falls within the range described above.

The polyvinyl acetal resin is usually constituted by an acetal group-containing unit, a hydroxy group-containing unit, and an acetyl group-containing unit. The amount of each unit can be measured by, for example, JIS K 6728 "Testing methods for polyvinyl butyral" or nuclear magnetic resonance (NMR).

When the polyvinyl acetal resin comprises a unit other than those described above, the amount of the hydroxy group-containing unit and the amount of the acetyl group-containing unit are measured. These amounts of both the units can be subtracted from the amount of the acetal group-containing unit with no other unit contained to calculate the amount of the acetal group-containing unit remaining.

The viscosity average degree of polymerization of the polyvinyl acetal resin is not particularly limited.

In the present specification, the viscosity of the polyvinyl acetal resin is a viscosity measured under conditions of 20°C and 30 rpm using a Brookfield (type B) viscometer as to a solution adjusted to 10% by mass using a mixed solvent of toluene and ethanol mixed at a mass ratio of 1:1 as a solvent, unless otherwise specified.

The viscosity of one or two or more polyvinyl acetal resins contained in the first adhesive layer is preferably more than 200 mPa·s, more preferably 210 mPa·s or more, more preferably 220 mPa·s or more, further preferably 230 mPa·s or more, particularly preferably 240 mPa·s or more, most preferably 265 mPa·s or more. When the viscosity of the polyvinyl acetal resin is more than 200 mPa·s, the misalignment of a translucent base material at high temperatures is easily suppressed in a laminate such as laminated glass. The viscosity of the polyvinyl acetal resin can be adjusted to more than 200 mPa·s by using a polyvinyl acetal resin produced using polyvinyl alcohol having a relatively high viscosity average degree of polymerization as a starting material or a portion of the starting material. When the first adhesive layer comprises two or more polyvinyl acetal resins, the viscosity described above is the viscosity of their mixture.

The viscosity is usually 1000 mPa·s or less, preferably 800 mPa·s or less, more preferably 500 mPa·s or less, particularly preferably 450 mPa·s or less, most preferably 400 mPa·s, from the viewpoint of good film formability.

The peak top molecular weight of the polyvinyl acetal resin contained in the first adhesive layer is not particularly limited and is preferably 115,000 to 200,000, more preferably 120,000 to 160,000, particularly preferably 130,000 to 150,000. The peak top molecular weight of the polyvinyl acetal resin can be adjusted to within the range described above by using a polyvinyl acetal resin produced using polyvinyl alcohol having a high viscosity average degree of polymerization as a starting material or a portion of the starting material. When the peak top molecular weight of the polyvinyl acetal resin falls within the range described above, suitable film formability and suitable film physical properties (e.g., heat pressure bonding aptitude, creep resistance, and rupture elongation) are easily obtained.

The molecular weight distribution defined as a ratio (Mw/Mn) which is composed of weight average molecular weight (Mw) and number average molecular weight (Mn), of the polyvinyl acetal resin contained in the first adhesive layer is not particularly limited and is preferably 2.7 or more, more preferably 2.8 or more, particularly preferably 2.9 or more. The molecular weight distribution of the polyvinyl acetal resin can be adjusted by acetalizing two or more polyvinyl alcohols differing in viscosity average degree of polymerization, or by mixing two or more acetalization products of polyvinyl alcohols differing in viscosity average degree of polymerization. When the molecular weight distribution of the polyvinyl acetal resin is equal to or more than the lower limit value described above, both of suitable film formability and suitable film physical properties (e.g., heat pressure bonding aptitude, creep resistance, and rupture strength) are easily achieved. The upper limit value of the molecular weight distribution is not particularly limited and is usually 10, preferably 5, from the viewpoint of easy film formation.

When the first adhesive layer comprises two or more polyvinyl acetal resins, the peak top molecular weight and molecular weight distribution of at least one of the polyvinyl acetal resins preferably falls within the range described above.

The peak top molecular weight and the molecular weight distribution are determined, for example, by use of gel permeation chromatography (GPC) with polystyrene standards having a known molecular weight.

The first adhesive layer preferably comprises a polyvinyl acetal resin that is not cross-linked from the viewpoint of easily obtaining good film formability, and may comprise a cross-linked polyvinyl acetal resin. For the method for cross-linking the polyvinyl acetal resin, see, for example, European Patent No. 1527107 and International Patent Publication No. WO 2004/063231 (thermal self-cross-linking of carboxyl group-containing polyvinyl acetal), European Patent Application Publication No. 1606325 (polyvinyl acetal cross-linked using polyaldehyde), and International Patent Publication No. WO 2003/020776 (polyvinyl acetal cross-linked using glyoxylic acid). The amount of an intermolecular acetal bond and the degree of blocking of residual hydroxy groups, etc. can also be adjusted by appropriately adjusting acetalization reaction conditions.

<Ionomer>

Hereinafter, an aspect of the first adhesive layer comprising an ionomer will be described.

The ionomer is a resin having an ethylene-derived constituent unit and an $\alpha,\beta$-unsaturated carboxylic acid-derived constituent unit and having $\alpha,\beta$-unsaturated carboxylic acid neutralized at least partially with a metal ion.

Examples of the $\alpha,\beta$-unsaturated carboxylic acid include (meth)acrylic acid, maleic acid, monomethyl maleate, monoethyl maleate, and maleic anhydride. (meth)acrylic acid or the like is preferred.

Examples of the metal ion include sodium ion.

The percent content of the constituent unit of the $\alpha,\beta$-unsaturated carboxylic acid in an ethylene-a,p-unsaturated carboxylic acid copolymer serving as a base polymer is preferably 2% by mass or more, more preferably 5% by mass or more, and preferably 30% by mass or less, more preferably 20% by mass or less. An ionomer of an ethylene-(meth)acrylic acid copolymer or the like is preferred from the viewpoint of easy obtainability. Suitable examples of the ethylene ionomer include sodium ionomers of ethylene-(meth)acrylic acid copolymers.

In the present specification, "(meth)acrylic acid" is a generic name for "acrylic acid" and "methacrylic acid"; "(meth)acrylate" is a generic name for "acrylate" and "methacrylate"; and "(meth)acryloyl" is a generic name for "acryloyl" and "methacryloyl", unless otherwise specified.

<Plasticizer>

The first adhesive layer can be supplemented, if necessary, with a plasticizer in order to improve yields in the process of producing a starting material film of the first adhesive layer and the penetration resistance of laminated glass.

In general, when the first adhesive layer and/or the second adhesive layer comprises a plasticizer without inhibiting the transfer of the plasticizer between these layers (e.g., when these layers are in partial contact), the transfer of the plasticizer tends to occur gradually with time after production of a laminate such as laminated glass so that the amount of the plasticizer contained is nearly equal between the first adhesive layer and the second adhesive layer in the final state of equilibrium. In the present specification, this amount of the plasticizer contained in the first adhesive layer and the second adhesive layer in the final state of equilibrium is referred to as an "average amount of the plasticizer".

When the first adhesive layer comprises a plasticizer, the plasticizer content of the first adhesive layer, i.e., the plasticizer content in the resin film which is a material for the first adhesive layer, is not particularly limited. The plasticizer content is preferably more than 0% by mass and less than 20% by mass with respect to the total amount of a resin composition constituting the resin film from the viewpoint of improvement in yields in the process of producing the intermediate laminate of the present invention and the laminate of the present invention such as laminated glass.

If the amount of the plasticizer in the resin film is 20% by mass or more, the first adhesive layer might be wrinkled due to cure shrinkage in the step of forming the first cross-linked cured resin layer on the resin film. When wrinkles are formed in the first adhesive layer, air bubbles might be injected into the first adhesive layer or the first adhesive layer might have an uneven thickness, due to the wrinkles formed in the first adhesive layer in a heat pressure bonding step at the time of production of a laminate such as laminated glass. The appearance of the resulting laminate such as laminated glass might be degraded.

The plasticizer content in the resin film is more preferably less than 12% by mass, particularly preferably less than 8% by mass. The plasticizer content in the resin film may be 0% by mass.

The plasticizer is not particularly limited, and one or two or more of plasticizers (1) to (5) listed below can be used.

(1) Ester of a polyvalent aliphatic or aromatic acid. Examples of the ester include dialkyl adipate (e.g., dihexyl adipate, di-2-ethylbutyl adipate, dioctyl adipate, di-2-ethylhexyl adipate, hexylcyclohexyl adipate, a combination of heptyl adipate and nonyl adipate, diisononyl adipate, and heptylnonyl adipate); ester of adipic acid and an alcohol having an alicyclic ester structure or/and ether structure (e.g., di(butoxyethyl) adipate and di(butoxyethoxyethyl) adipate); dialkyl sebacate (e.g., dibutyl sebacate); ester of sebacic acid and an alcohol having an alicyclic structure or ether structure; phthalic acid ester (e.g., butylbenzyl phthalate and bis-2-butoxyethyl phthalate); and ester of alicyclic polyvalent carboxylic acid and aliphatic alcohol (e.g., 1,2-cyclohexanedicarboxylic acid diisononyl ester).

(2) Ester or ether of polyvalent aliphatic or aromatic alcohol or oligoether glycol having one or more aliphatic or aromatic substituents. Examples of the ester or the ether include ester of glycerin, diglycol, triglycol, tetraglycol or the like and linear or branched aliphatic or alicyclic carboxylic acid. Specific examples thereof include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether, and dipropylene glycol benzoate.

(3) Phosphoric acid ester of aliphatic or aromatic ester alcohol. Examples of the phosphoric acid ester include tris(2-ethylhexyl) phosphate (TOF), triethyl phosphate, diphenyl-2-ethylhexyl phosphate, and tricresyl phosphate.

(4) Ester of citric acid, succinic acid, or fumaric acid.

(5) Polyester or oligoester obtained from polyhydric alcohol and polyvalent carboxylic acid; terminal esterification products or etherification products thereof; polyester or oligoester obtained from lactone or hydroxycarboxylic acid; and terminal esterification products or etherification products thereof.

When both of the resin film which is a material for the first adhesive layer and the resin film which is a material for the second adhesive layer comprise a plasticizer, the plasticizer used in the first adhesive layer is preferably the same plasticizer as that contained in the second adhesive layer, or a plasticizer that does not impair the physical properties (e.g., heat resistance, light resistance, transparency, and plasticization effect) of the second adhesive layer from the viewpoint of suppressing problems such as time-dependent change in physical properties associated with the transfer of the plasticizers between these layers. From such a viewpoint, the plasticizer of the first adhesive layer is preferably triethylene glycol-bis-(2-ethyl hexanoate) (3GO or 3G8), triethylene glycol-bis(2-ethyl butanoate), tetraethylene glycol-bis-(2-ethyl hexanoate), or tetraethylene glycol-bisheptanoate, particularly preferably triethylene glycol-bis-(2-ethyl hexanoate) (3G8) or the like.

<Additive>

The first adhesive layer may comprise an arbitrary additive other than those described above. Examples of the additive include water, ultraviolet absorbers, antioxidants, adhesion adjusters, whitening agents such as fluorescent whitening agents, stabilizers, dyes, processing aids, organic or inorganic nanoparticles, pyrogenic silicic acid, and surfactants.

When the first adhesive layer comprises an ultraviolet absorber and an ultraviolet curable composition is used as a starting material for the first cross-linked cured resin layer, the ultraviolet transmittance of the first adhesive layer is preferably adjusted such that the cross-linking and curing of the ultraviolet curable composition proceeds satisfactorily. The ultraviolet transmittance of the first adhesive layer can be adjusted by appropriately adjusting the type of a curable compound contained in the ultraviolet curable composition, or the type and/or amount of a polymerization initiator, etc. The resulting ultraviolet curable composition can have good cross-linkability and curability. The ultraviolet transmittance of the first adhesive layer is preferably 95% or more, more preferably 90% or more.

In the present specification, the ultraviolet transmittance is determined by a method described in the section [Examples], unless otherwise specified.

The thickness of the first adhesive layer is not particularly limited. A relatively small thickness within a range that produces sufficient adhesiveness is advantageous because such a thickness facilitates uniformizing the amount of the plasticizer transferred after production of the laminate of the present invention such as laminated glass. The thickness of the first adhesive layer is preferably 10 to 450 μm, more preferably 15 to 400 μm.

<Method for producing resin film>

The method for producing the resin film which is a material for the first adhesive layer is not particularly limited. One or two or more constituting resins, such as a polyvinyl acetal resin and/or an ionomer resin, an optional plasticizer, and optional other additives are blended and uniformly kneaded. Then, a film can be formed by a known film formation method such as an extrusion method, a calendar method, a press method, a casting method, or an inflation method to produce a resin film. Among these film formation methods, an extrusion method is preferred which produces the resin film using an extruder.

In general, the terms "film" and "sheet" are used for thin-membrane molded bodies, depending on their thicknesses. In the present specification, these are collectively referred to as "films" without being clearly differentiated.

In the resin film which is a material for the first adhesive layer, the average surface roughness Rz value of at least a surface on the side where the first cross-linked cured resin layer is formed is preferably 20 μm or less, more preferably 5 μm or less, particularly preferably 3 μm or less. In the resin film which is a material for the first adhesive layer, the RSm value, a mean length of roughness profile elements, of at least a surface on the side where the first cross-linked cured resin layer is formed is preferably 500 μm or more, more preferably 1000 μm or more, particularly preferably 1300 μm or more. When the Rz value is equal to or less than the upper limit value described above and the RSm value is equal to or more than the lower limit value described above, a material for the first cross-linked cured resin layer can be uniformly printed on the resin film or the resin film may be uniformly coated therewith. Thus, the first adhesive layer and the first cross-linked cured resin layer can be allowed to adhere uniformly to each other. The Rz value and the RSm value can be measured in accordance with JIS B 0601-1994 using a surface roughness meter or a laser microscope.

For adjusting the Rz value and the RSm value to within the stipulations described above, it is preferred to adopt a melt extrusion method or a solvent casting method, etc. as the method for producing the resin film which is a material for the first adhesive layer. The melt extrusion method is preferably a T die method or an inflation molding method, etc. A method is preferred in which a film in a melted state extruded from a T die is solidified by cooling using a plurality of cooling rolls (preferably metal elastic rolls) having a smooth surface.

(First cross-linked cured resin layer)

The first cross-linked cured resin layer (12) is a layer obtained by cross-linking and curing a curable composition comprising an active energy ray curable compound and/or a thermosetting compound.

The active energy ray curable composition comprises a polymerizable compound such as a monomer, an oligomer, or a prepolymer and can optionally comprise other components such as a polymerization initiator and a diluent. An unsaturated ethylene compound that contains one or more ethylene double bonds in the molecule and is polymerizable by irradiation with active energy ray can generally be used as the monomer and the oligomer. Compounds such as cation polymerizable epoxy or oxetane compounds may be used in combination, if necessary, as the polymerizable compound.

Examples of the unsaturated ethylene compound that is polymerizable by irradiation with active energy ray include: monofunctional (meth)acrylate monomers such as (meth)acrylic acid, methyl (meth)acrylate, ethyl (meth)acrylate, propyl (meth)acrylate, n-butyl (meth)acrylate, t-butyl (meth)acrylate, 2-ethylhexyl (meth)acrylate, benzyl (meth)acrylate, glycidyl (meth)acrylate, tetrahydrofurfuryl (meth)acrylate, and 2-hydroxyethyl (meth)acrylate; vinyl monomers such as N-vinylpyrrolidone, N-vinylimidazole, N-vinylcaprolactam, styrene, α-methylstyrene, vinyltoluene, allyl acetate, vinyl acetate, vinyl propionate, and vinyl benzoate; difunctional (meth)acrylate monomers such as 1,4-butanediol di(meth)acrylate, 1,6-hexanediol di(meth)acrylate, 1,9-nonanediol di(meth)acrylate, ethylene glycol di(meth)acrylate, and polyethylene glycol di(meth)acrylate; and polyfunctional (meth)acrylate monomers such as trimethylolpropane tri(meth)acrylate, pentaerythritol tri(meth)acrylate, pentaerythritol tetra(meth)acrylate, pentaerythritol penta(meth)acrylate, pentaerythritol hexa(meth)acrylate, dipentaerythritol hexa(meth)acrylate, triallyl cyanurate, triallyl isocyanurate, and 1,3,5-tri(meth)acryloyl hexahydro-s-hydrazine. One or two or more of these compounds can be used.

Examples of the polymerization initiator optionally used include 2,2-dimethoxy-2-phenylacetone, acetophenone, benzophenone, xanthofluorenone, benzaldehyde, anthraquinone, 1-(4-isopropylphenyl)-2-hydroxy-2-methylpropan-1-one, 1-hydroxy-cyclohexyl-phenyl-ketone, 4-oxanthone, camphor quinone, and 2-methyl-1-[4-(methylthio)phenyl]-2-morpholinopropan-1-one.

Examples of the diluent optionally used include acetone, ethanol, methanol, isopropyl alcohol, hexane, ethyl acetate, chloroform, carbon tetrachloride, tetrahydrofuran, diethyl ether, methylethylketone, toluene, and benzene.

The thermosetting composition comprises at least one of a monomer, an oligomer, a prepolymer, and a polymer resin as a polymerizable compound and can optionally comprise other components such as a thermosetting agent. Examples of the monomer include a combination of polyol and isocyanate, trimethylolpropane (meth)acrylate, and hexanediol (meth)acrylate. Examples of the oligomer include reaction products of polyol and isocyanate. Examples of the polymer resin include phenol resin.

Examples of the thermosetting agent include isocyanate compounds, epoxy resin, phenol resin, melamine resin, urea resin, unsaturated polyester resin, alkyd resin, polyurethane, and thermosetting polyimide.

The refractive indexes, measured in accordance with JIS7142, of a resin constituting the first adhesive layer and a resin constituting the first cross-linked cured resin layer (cross-linked cured resin) preferably satisfy the following expression (1) because laminated glass having good transmission visibility is obtained:

$$|n(A) - n(B)| \leq 0.05 \ldots \text{Expression (1)},$$

wherein n(A) represents the refractive index of the resin constituting the first adhesive layer, and n(B) represents the refractive index of the resin constituting the first cross-linked cured resin layer.

If the refractive index difference defined according to the expression described above is more than 0.05, the edges of the first cross-linked cured resin layer might be visible as dark lines in a laminate such as laminated glass, resulting in reduced transmission visibility.

When the refractive index difference is 0.05 or less, the refractive index difference between the first adhesive layer and the first cross-linked cured resin layer is sufficiently small. Thus, these layers can be visible so as to be integrated.

The first cross-linked cured resin layer can have a fine concave and convex pattern on a surface on the side opposite to the first adhesive layer side. In such an aspect, the first cross-linked cured resin layer can serve as a functional layer that imparts various functions such as optical functions (e.g., a light gathering function and a light diffusion function) to a laminate, such as laminated glass, obtained using the intermediate laminate of the present invention.

The fine concave and convex pattern can be formed as an arbitrary pattern on the surface of the first cross-linked cured resin layer and can be freely designed according to the functions to be imparted.

In the present invention, the first adhesive layer can function as a support which supports the first cross-linked cured resin layer that can function as the functional layer. In such a configuration, functions can be easily designed at low cost by merely designing the pattern of the first cross-linked cured resin layer to be formed on the first adhesive layer without providing a film having a special function as a material for the first adhesive layer serving as a support.

Examples of the fine concave and convex pattern include Fresnel lens patterns comprising one or more Fresnel lens-shaped convex portions or concave portions, microlens (array) patterns comprising one or more microlens-shaped convex portions or concave portions, moth-eye processed lens (array) patterns comprising one or more lens-shaped convex portions or concave portions and further having a moth-eye processed surface of each convex portion, line-and-space patterns in which a plurality of linear convex portions are spaced and arranged, pillar (array) patterns comprising one or more pillared convex portions, hole (array) patterns comprising one or more holes (concave portions), and diffraction grating patterns. The first cross-linked cured resin layer having such a fine concave and convex pattern can function as an optical functional layer or the like having optical functions such as a light gathering function and a light diffusion function.

The fine concave and convex pattern is preferably, for example, a lens pattern comprising one or more Fresnel lens-shaped or microlens-shaped convex portions.

When the fine concave and convex pattern is an array pattern, such as a microlens array pattern, a moth-eye processed lens array pattern, a line-and-space pattern, a pillar array pattern, or a hole array pattern, in which a plurality of convex portions or concave portions are periodically formed, the pattern pitch is not particularly limited and can be within a range of, for example, 10 to 500 μm.

The thickness of the first cross-linked cured resin layer is not particularly limited and can be appropriately designed according to the presence or absence of the fine concave and convex pattern and functions thereof. Too thick a first cross-linked cured resin layer might be less handleable at the time of production. Therefore, the thickness is preferably 3 mm or smaller.

(Functional layer)

The intermediate laminate of the present invention can optionally have various functions layers (13) such as a light reflection layer reflecting at least a portion of light, a hologram layer, a conductive layer, reflection layers for electromagnetic wave in specific wavelength regions such as an infrared reflection layer and an ultraviolet reflection layer, a color correction layer, absorption layers for light in specific wavelength regions such as an infrared absorption layer and an ultraviolet absorption layer, a light emission layer such as a fluorescent layer, a sound insulation layer, an electrochromic layer, a thermochromic layer, a photochromic layer, a designing layer, and a high-modulus layer, on the first cross-linked cured resin layer (12), preferably on the fine concave and convex pattern disposed on the surface of the first cross-linked cured resin layer (12). The intermediate laminate of the present invention may have a plurality of functional layers having the same or different functions.

When the first cross-linked cured resin layer is a functional layer having a fine concave and convex pattern on the surface, the functional layer described above can have a function different from that of the first cross-linked cured resin layer.

<Light reflection layer>

Examples of the functional layer preferred for purposes such as glazing materials and combiners for head-up displays (HUD) include light reflection layers reflecting at least a portion of light. For purposes such as combiners for HUD, a half mirror layer is preferred which reflects a portion of light and permits transmission of the remaining light. The half mirror layer efficiently reflects video light projected from a projector or the like while permitting direct transmission of outside light, and thus does not deteriorate transmission visibility.

Examples of the material for the light reflection layer include metals such as aluminum, silver, and nickel because of relatively easy film formation. However, in general, metals tend to have large light absorption loss and low transparency, though having a high light reflectance. Hence, the metals are used for purposes that do not require high transparency.

For purposes that require high transparency, it is preferred to use a transparent dielectric having small light absorption loss as the material for the light reflection layer. In this case, the light reflection layer consists of one or two or more dielectric layers. A two-layer or more multilayer dielectric structure can enhance a reflectance. When dielectric layer a having a relatively high refractive index and dielectric layer b having a relatively low refractive index are laminated, slight reflection occurs at the interface therebetween. In this respect, the reflectance can be controlled by optimizing the film thicknesses of the dielectric layer a and the dielectric layer b. A similar theory can be applied to the lamination of 3 or more layers. The thickness and refractive index of each layer can be appropriately designed.

Hereinafter, an aspect of a multilayer dielectric film in which the light reflection layer consists of two or more dielectric layers will be described.

Examples of the material for the dielectric layer a having a relatively high refractive index (relatively high-refractive index material) include $TiO_2$ (titanium dioxide), $HfO_2$ (hafnium oxide), $Nb_2O_5$ (niobium pentoxide), $Ta_2O_5$ (tantalum pentoxide), $AlO_3$ (aluminum oxide), $MgO$ (magnesium oxide), $ZnSe$ (zinc selenide), and $Si_3N_4$ (silicon nitride). Examples of the material for the dielectric layer b having a relatively low refractive index (relatively low-refractive index material) include $SiO_2$ (silicon dioxide), $MgF_2$ (magnesium fluoride), and $CaF_2$ (calcium fluoride). However, the materials for both the dielectric layers a and b may be selected from the relatively high-refractive index material group or the relatively low-refractive index material group because the dielectric layers can differ relatively in refractive index.

The film thickness of each dielectric layer is preferably on the order of 3 to 200 nm from the viewpoint of a uniform film thickness. In general, for moderately reflecting light in the visible light region (wavelength region from approximately 400 to approximately 700 nm) and securing a transmittance to some extent, it is preferred to adjust the reflectance of the light reflection layer to on the order of 5 to 80%. The reflectance can be adjusted by the refractive index of each dielectric layer, the film thickness of each dielectric layer, and the number of dielectric layers. The number of layers is not particularly limited and is preferably approximately 20 or less layers from the viewpoint of production cost. In this case, the total thickness of the light reflection layer is on the order of 6 to 2000 nm.

(Second cross-linked cured resin layer)

The intermediate laminate of the present invention can optionally have a second cross-linked cured resin layer (14) on the first cross-linked cured resin layer (12) or on the optionally disposed functional layer (13) such as a light reflection layer. This aspect is effective when the first cross-linked cured resin layer has a fine concave and convex pattern on the surface. The second cross-linked cured resin layer can disperse pressure applied to the fine concave and convex pattern contained in the first cross-linked cured resin layer in a heat pressure bonding step at the time of production of a laminate such as laminated glass, and thereby suppress the deformation of the pattern under pressure.

The second cross-linked cured resin layer is obtained by cross-linking and curing a curable composition comprising an active energy ray curable compound and/or a thermosetting compound. A material and a formation method suitably used are the same as those for the first cross-linked cured resin layer.

The refractive indexes, measured in accordance with JIS7142, of a resin constituting the first cross-linked cured resin layer (cross-linked cured resin) and a resin constituting the second cross-linked cured resin layer (cross-linked cured resin) satisfy the following expression (2) because a laminate, such as laminated glass, having good transmission visibility is obtained:

$$|n(D) - n(B)| \leq 0.05 \ldots \text{Expression (2)},$$

wherein n(B) represents the refractive index of the resin constituting the first cross-linked cured resin layer, and n(D) represents the refractive index of the resin constituting the second cross-linked cured resin layer.

If the refractive index difference defined according to the expression described above is more than 0.05, the edges of the first cross-linked cured resin layer and/or the second cross-linked cured resin layer might be visible as dark lines in a laminate such as laminated glass, resulting in reduced transmission visibility. When the refractive index difference is 0.05 or less, the refractive index difference between the first cross-linked cured resin layer and the second cross-linked cured resin layer is sufficiently small. Thus, these layers can be visible so as to be integrated.

The surface of the second cross-linked cured resin layer on the side opposite to the first cross-linked cured resin layer side is preferably a smooth surface, more preferably a mirrored surface, because the haze of a laminate such as laminated glass is suppressed so that the resulting laminate such as laminated glass has good transmission visibility.

(Second adhesive layer)

The intermediate laminate of the present invention can optionally have a second adhesive layer (15) on a surface on the side opposite to the first adhesive layer side. The second adhesive layer (15) is a layer capable of allowing a second translucent base material and a layer in contact with the second adhesive layer (15) to adhere to each other. A resin film or the like for intermediate films of laminated glass is preferably used as a material therefor. The second adhesive layer may have a single-layer structure or a laminated structure.

When the second adhesive layer has a laminated structure, the second adhesive layer is also capable of functioning as a functional layer having one or more functions selected from the group consisting of a coloring region, a light absorption function, a light reflection function, a sound insulation function, a light scattering function, a light emission function, a conductive function, a fiber containment function, a double image prevention function, and a protection function.

Examples of the resin constituting the second adhesive layer include polyvinyl acetal resins, ionomer resins, styrene-vinyldiene copolymer resin, ethylene-vinyl acetate copolymer resin, vinyl chloride resin, and urethane resin from the viewpoint of adhesiveness and the transmission visibility of a laminate such as laminated glass. One or two or more of these resins can be used. As in the first adhesive layer, a polyvinyl acetal resin and an ionomer resin, etc. are preferred from the viewpoint of weather resistance, strength such as bending strength, and penetration resistance.

The same resin as the resin constituting the first adhesive layer is preferably selected from the viewpoint of the transparency of the intermediate laminate of the present invention and a laminate, such as laminated glass, comprising the same. However, parameters such as a modification rate can be appropriately designed according to required physical properties.

Properties and a production method suitably used in the polyvinyl acetal resin and the ionomer resin are the same as those for the first adhesive layer. The second adhesive layer may comprise a plasticizer and other arbitrary additives, as in the first adhesive layer.

The method for producing the resin film suitably used as the second adhesive layer is the same as that for the first adhesive layer.

In one aspect, the second adhesive layer can comprise a polyvinyl acetal resin produced by the acetalization of polyvinyl alcohol resin such as polyvinyl alcohol or an ethylene-vinyl alcohol copolymer, as in the first adhesive layer. In this case, the second adhesive layer preferably comprises a polyvinyl acetal resin that is not cross-linked, from the viewpoint of easily obtaining good film formability and heat pressure bondability and from the viewpoint of lessening head impact at the time of crash in glazing materials for vehicles comprising the intermediate laminate of the present invention, and may comprise a cross-linked polyvinyl acetal resin. For the method for cross-linking the polyvinyl acetal resin, see the description about the first adhesive layer.

In a preferred aspect, the second adhesive layer can preferably comprise a polyvinyl acetal resin and a plasticizer.

As described above, in general, when the first adhesive layer and/or the second adhesive layer comprises a plasticizer without inhibiting the transfer of the plasticizer between these layers (e.g., when these layers are in partial contact), the transfer of the plasticizer tends to occur gradually with time after production of a laminate such as laminated glass so that the amount of the plasticizer contained is nearly equal between the first adhesive layer and the second adhesive layer in the final state of equilibrium.

The plasticizer content of the second adhesive layer, i.e., the plasticizer content in the resin film which is a material for the second adhesive layer, is not particularly limited and is preferably larger than that in the resin film which is a material for the first adhesive layer because a laminate, such as laminated glass, excellent in impact resistance is easily obtained. The plasticizer content is preferably 16.0% by mass or more, more preferably 16.1 to 36.0% by mass, particularly preferably 22.0 to 32.0% by mass, most preferably 26.0 to 30.0% by mass, with respect to the total amount of a resin composition constituting the resin film.

A relatively large amount of the plasticizer added can be provided with a sound insulation function to the second adhesive layer. In this case, the plasticizer content in the resin film which is a material for the second adhesive layer is preferably 20% by mass or more, more preferably 30% by mass or more, further preferably 30 to 50% by mass, particularly preferably 31 to 40% by mass, most preferably 32 to 35% by mass, with respect to the total amount of a resin composition constituting the resin film.

When the second adhesive layer comprises the plasticizer at a relative high concentration and has a sound insulation function, the sound insulation function of the intermediate laminate of the present invention or a laminate, such as laminated glass, comprising the same can be adjusted by a combination with the first adhesive layer optionally comprising a plasticizer.

Examples of the plasticizer are the same as those for the first adhesive layer.

When the first adhesive layer comprises at least one polyvinyl acetal resin and optionally comprises a plasticizer and the second adhesive layer comprises at least one polyvinyl acetal resin and preferably comprises a plasticizer, the difference between the hydroxy group content of the at least one polyvinyl acetal resin constituting the first adhesive layer and the hydroxy group content of the at least one polyvinyl acetal resin constituting the second adhesive layer is preferably 4% by mass or less, more preferably 2% by mass or less, particularly preferably 1% by mass or less.

When the difference in hydroxy group content is equal to or less than the upper limit value described above, the refractive index difference between the first adhesive layer and the second adhesive layer is sufficiently small in the state of equilibrium after transfer of the plasticizer in a laminate such as laminated glass so that the edges of the first adhesive layer or the second adhesive layer are rarely visible, which is preferred.

It is preferred that: the hydroxy group content of the polyvinyl acetal resin constituting the first adhesive layer comprising at least one polyvinyl acetal resin and optionally comprising a plasticizer should be lower than that of the polyvinyl acetal resin constituting the second adhesive layer comprising at least one polyvinyl acetal resin and preferably comprising a plasticizer; and the average amount of the plasticizer in the second adhesive layer should be 30% by mass or more in the state of equilibrium after transfer of the plasticizer in a laminate such as laminated glass. In this case, the hydroxy group content of the polyvinyl acetal resin constituting the first adhesive layer is preferably lower by 5% by mass or more, more preferably 8% by mass or more, than that of the polyvinyl acetal resin constituting the second adhesive layer. When the difference in hydroxy group content is stipulated as mentioned above, the amount of the plasticizer in the second adhesive layer can be sufficiently high in the state of equilibrium in a laminate such as laminated glass. Thus, a laminate, such as laminated glass, having a sound insulation function is easily obtained.

For purposes such as head-up displays (HUD), the second adhesive layer may have a thickness profile in which the thickness is gradually decreased from the upper side toward the lower side viewed from a viewer (wedge-shaped thickness profile). Such a configuration produces an effect of suppressing poor visibility such as a double image even if a fine concave and convex pattern having optical functions is not imparted to the surface of the first cross-linked cured resin layer.

The second adhesive layer can comprise an arbitrary functional component.

The second adhesive layer preferably comprises an ultraviolet absorber from the viewpoint of improvement in weather resistance, etc. The ultraviolet transmittance of the second adhesive layer is not particularly limited and is preferably 20% or less, more preferably 10% or less.

The second adhesive layer can comprise nanoparticles having the property of absorbing or reflecting infrared ray. In this case, the second adhesive layer can function as an infrared shielding layer.

The second adhesive layer may be a coloring layer containing a pigment and/or a dye. For purposes such as automotive front windshields, the second adhesive layer may have color gradation.

[Method for producing intermediate laminate]

The method for producing the intermediate laminate of the present invention is not particularly limited.

The method for producing the intermediate laminate of one embodiment according to the present invention comprises the steps of:

proviging a resin film as a material for the first adhesive layer (11) (S1);
coating the resin film with a cross-linkable curable composition (uncross-linked uncured material) which is a material for the first cross-linked cured resin layer (S2) (coating step); and
cross-linking and curing the coating layer to form the first cross-linked cured resin layer (12) (S4) (cross-linking and curing step).

The coating surface of the first adhesive layer may be subjected in advance to surface treatment such as corona treatment.

Examples of the coating method with the cross-linkable curable composition (uncross-linked uncured material) include, but are not particularly limited to, a bar coating method, a knife coating method, a curtain flow coating method, a roll coating method, a dipping coating method, a spray coating method, and a spin coating method.

The cross-linking and curing method is appropriately selected according to the type of a polymerizable compound contained in the cross-linkable curable composition.

In the case of using an active energy ray curable compound as the polymerizable compound, cross-linking and curing can be performed by irradiation with active energy ray such as ultraviolet ray or electron beam. Ultraviolet irradiation is preferred from the viewpoint of being convenient and inexpensive. Examples of the ultraviolet light source include, but are not particularly limited to, ultra-high pressure mercury lamps, high-pressure mercury lamps, low-pressure mercury lamps, metal halide lamps, carbon arc lamps, and xenon lamps. Among them, a high-pressure mercury lamp and a metal halide lamp, etc. are preferred which emit a relatively large amount of ultraviolet ray centered on a wavelength of 365 nm.

In the case of using a thermosetting compound as the polymerizable compound, cross-linking and curing can be performed by heating.

In the case of using an active energy ray curable compound and a thermosetting compound in combination as the polymerizable compound, the cross-linkable curable composition can be cross-linked and cured by irradiation with active energy ray and heating.

The step of impressing a mold having an inverted pattern of a fine concave and convex pattern to be imparted on a surface of a coating layer comprising the cross-linkable curable composition (S3) (pattern transfer step) may be added to between the step (S2) (coating step) and the step (S4) (cross-linking and curing step), and the step of removing an intermediate laminate comprising the first adhesive layer and the first cross-linked cured resin layer from the mold (S5) (demolding step) may be added after the step (S4) (cross-linking and curing step).

These steps thus added can produce an intermediate laminate having a fine concave and convex pattern on the surface of the first cross-linked cured resin layer.

In the case of performing curing with active energy ray, a transmittance appropriate for the wavelength of the active energy ray used is taken into consideration as to each of the resin film which is a material for the first adhesive layer and the mold. One side or both sides having a high active energy ray transmittance can be irradiated with active energy ray.

In the case of using, for example, a metal (e.g., copper and nickel) mold, as the mold, the resin film side, which is a material for the first adhesive layer having high transparency, is preferably irradiated with active energy ray such as ultraviolet ray. In the case of using ultraviolet ray as the active energy ray, the resin film which is a material for the first adhesive layer preferably has a small content of an ultraviolet absorber and has a sufficient ultraviolet transmittance.

In the case of performing thermosetting, pattern transfer and curing may be carried out at the same time by pressing the mold heated in advance against the coating layer, or the mold may be pressed against the coating layer, followed by heating.

The mold having an inverted pattern of a fine pattern to be imparted to the first cross-linked cured resin layer can be produced by a known method such as a mask exposure method, an electron lithography method, or an interference exposure method. Other examples of the method include the anodization of aluminum or the like, called self-organization, and fine particle arrangement, which can cope with large areas.

The mold may be a metal (e.g., copper and nickel) mold or may be a resin mold formed using the metal mold.

When the intermediate laminate has the functional layer (13) such as a light reflection layer on the first cross-linked cured resin layer (12), the method for producing the intermediate laminate can have the step of forming the functional layer (13) such as a light reflection layer on the first cross-linked cured resin layer (12).

Examples of the method for forming the functional layer (13) such as a light reflection layer on the first cross-linked cured resin layer (12) include, but are not particularly limited to, a vapor deposition method, a sputtering method, an ion plating method, and a dip coating method.

When the intermediate laminate has the second cross-linked cured resin layer (14) on the first cross-linked cured resin layer (12) or on the functional layer (13) such as a light reflection layer, the method for producing the intermediate laminate can have the step of forming the second cross-linked cured resin layer (14). The step of forming the second cross-linked cured resin layer (14) can comprise a coating step and a cross-linking and curing step, as in the step of forming the first cross-linked cured resin layer (12).

When the intermediate laminate has the second adhesive layer (15), the second cross-linked cured resin layer (14) may be formed on the resin film which is a material for the second adhesive layer (15).

When the intermediate laminate has the second adhesive layer (15), the method for producing the intermediate laminate can have the step of heat pressure-bonding a first resin film with the first cross-linked cured resin layer (12) and the optional functional layer (13) formed on the surface (material for the first adhesive layer (11)) to a second resin film with the optional second cross-linked cured resin layer (14) formed on the surface (material for the second adhesive layer (15)).

The method for layering the respective members is not particularly limited. For example, the first resin film of the desired width with the first cross-linked cured resin layer and the optional functional layer formed on one of the surfaces (material for the first adhesive layer) is continuously supplied from a first roll, and the second resin film of the desired width with the optional second cross-linked cured resin layer formed on one of the surfaces (material for the second adhesive layer) is continuously supplied thereonto from a second roll. The obtained intermediate laminate may be cut into the desired length.

The first resin film of the desired width with the first cross-linked cured resin layer and the optional functional layer formed on one of the surfaces (material for the first adhesive layer), and the second resin film of the desired width with the optional second cross-linked cured resin layer formed on one of the surfaces (material for the second adhesive layer) may each be cut into the desired size in advance and then layered.

For purposes such as automotive front windshields, the second resin film supplied from a roll may be heated, stretched, cut, and processed into an arbitrary shape such as a wedge shape, and the resultant can be layered on the first resin film of the desired width with the first cross-linked cured resin layer and the optional functional layer formed on one of the surfaces.

[Laminate such as laminated glass]

The laminate of the present invention comprises the intermediate laminate of the present invention described above and a pair of translucent base materials holding this intermediate laminate therebetween.

Examples of the translucent base material include: inorganic glass base materials such as float plate glass, polished plate glass, figured glass, wired plate glass, and heat-absorbing plate glass; and resin base materials containing transparent resins such as methacrylic resin and polycarbonate resin. One or two or more of these base materials can be used. The translucent base material may be colorless or colored and may be transparent or nontransparent. The thickness of the translucent base material is not particularly limited and is preferably 0.5 to 100 mm.

The ultraviolet transmittance of the laminate of the present invention is not particularly limited and is preferably 20% or less, more preferably 10% or less, from the viewpoint of improvement in weather resistance, etc.

The ultraviolet transmittance of the whole second adhesive layer and laminate can be adjusted to a low value by using the second adhesive layer comprising an appropriate amount of an ultraviolet absorber.

As described above, when the first adhesive layer and/or the second adhesive layer comprises a plasticizer without inhibiting the transfer of the plasticizer between these layers (e.g., when these layers are in partial contact), the transfer of the plasticizer tends to occur gradually with time after production of the laminate such as laminated glass so that the amount of the plasticizer contained is nearly equal between the first adhesive layer and the second adhesive layer in the final state of equilibrium.

This average amount of the plasticizer is not particularly limited and is preferably 18 to 35% by mass, more preferably 20 to 30% by mass, particularly preferably 25 to 29% by mass. When the amount of the plasticizer is nearly equal between the first adhesive layer and the second adhesive layer in the final state of equilibrium, the desired properties of the laminate such as laminated glass are easily obtained in such a way that, for example, impact on the head of a passenger at the time of crush is alleviated. The average amount of the plasticizer can be adjusted by the plasticizer contents of the first adhesive layer and the second adhesive layer, the thicknesses of these layers, etc.

[Method for producing laminate such as laminated glass]

The laminate such as laminated glass can be produced using the intermediate laminate of the present invention.

In the method for producing the laminate of the first embodiment, a first resin film with the first cross-linked cured resin layer (12) and the optional functional layer (13) formed on the surface (material for the first adhesive layer), a second resin film with the optional second cross-linked cured resin layer (14) formed on the surface (material for the second adhesive layer), and a second translucent base material (22) can be layered in this order on a first translucent base material (21) and heat pressure-bonded to produce a laminate such as laminated glass.

The design of the order of layering the respective members can be appropriately changed.

In the method for producing the laminate of the second embodiment, the intermediate laminate (5) of the fifth embodiment comprising the first adhesive layer (11), the first cross-linked cured resin layer (12), and the second adhesive layer (15) can be held between a pair of translucent base materials and heat pressure-bonded to produce a laminate such as laminated glass.

In the method for producing the laminate of the first or second embodiment, lamination may be repeated to produce a laminate, such as laminated glass, comprising a plurality of sets of lamination units each comprising one first adhesive layer, one first cross-linked cured resin layer, and one second adhesive layer.

In the method for producing the laminate of the first embodiment, the heat pressure bonding step is preferably performed by two stages, a preliminary pressure bonding step of preliminarily bonding a preliminary laminate comprising layers of the first translucent base material, the intermediate laminate (1) of the first embodiment, and the second translucent base material by heating at a relatively low temperature softening the first adhesive layer and the second adhesive layer while applying a relatively low pressure, and a main pressure bonding step of heat pressure-bonding the laminate after the preliminary pressure bonding step at a higher pressure and a higher temperature using an autoclave or the like.

In the method described above, the preliminary pressure bonding step is preferably carried out while deaeration is performed, in order to remove air between layers.

In the method for producing the laminate of the second embodiment, the main pressure bonding step can be carried out directly in the heat pressure bonding step without carrying out the preliminary pressure bonding step, because the first resin film with the first cross-linked cured resin layer (12) and the optional functional layer (13) formed on the surface (material for the first adhesive layer) and the second resin film with the optional second cross-linked cured resin layer (14) formed on the surface (material for the second adhesive layer) are allowed to adhere to each other in advance.

Preferred examples of the preliminary pressure bonding method include: a method of performing preliminary heating while performing vacuum deaeration, by use of a method such as a vacuum bag method, a vacuum ring method, or a vacuum laminator method; a method of performing deaeration and preliminary heating using a pair of nip rolls; and a method of performing compression while performing heating, from the viewpoint of preliminarily bonding layers adjacent to each other while removing air between the layers.

In the vacuum bag method or the vacuum ring method, the preliminary pressure bonding step can be carried out, for example, at a pressure of approximately $2 \times 10^4$ Pa and a temperature of 130 to 145°C (see, for example, European Patent No. 1235683).

In the vacuum laminator method, the preliminary pressure bonding step can usually be carried out under conditions involving a pressure of 1 to $3 \times 10^4$ Pa, a temperature of 100 to 200°C, preferably 130 to 160°C, and a treatment time of approximately 20 to approximately 60 minutes using a heatable and decompressible chamber. In the case of using the vacuum laminator method, the heat pressure bonding step using an autoclave may not be carried out, depending on temperature and pressure.

The main pressure bonding step using an autoclave can be carried out, for example, under conditions involving a pressure of approximately $1 \times 10^6$ to approximately $1.5 \times 10^6$ Pa, a temperature of approximately 100 to approximately 145°C, and a treatment time on the order of 20 minutes to 2 hours.

As described above, the intermediate laminate of the present invention comprises a first adhesive layer and a first cross-linked cured resin layer laminated directly with no other layer interposed therebetween. In the intermediate laminate of the present invention, a fine concave and convex pattern can be formed, if necessary, as an arbitrary pattern on the surface of the first cross-linked cured resin layer and can be freely designed according to the functions to be imparted. The first cross-linked cured resin layer can be simply formed by a method comprising a coating step and a cross-linking and curing step. The imparting of the fine concave and convex pattern to the first cross-linked cured resin layer can be simply carried out by transferring a pattern to the surface of a coating layer before cross-linking and curing.

The present invention can provide an intermediate laminate that is suitably used in laminates such as laminated glass, can be provided with various functions by a simple method, and has a high degree of freedom of design of the functions to be imparted, and a method for producing the same.

Provided that the intermediate laminate has suitable composition of each layer and suitable refractive index difference between layers, etc., the edges of a layer contained in the intermediate laminate are not visible as dark lines or are negligibly visible in a laminate such as laminated glass. Thus, an intermediate laminate excellent in transmission visibility can be provided.

A laminate, such as laminated glass, having various functions can be provided by using the intermediate laminate of the present invention. The functions of the laminate can be freely designed.

By appropriately designing the composition and physical properties of each layer of the intermediate laminate of the present invention, the misalignment of a translucent base material at high temperatures is suppressed, and a laminate, such as laminated glass, excellent in weather resistance and excellent in transmission visibility can be provided.

[Purpose]

The laminate comprising the intermediate laminate of the present invention can be suitably used as laminated glass or a glazing material for use in buildings and vehicles, etc. For vehicle purposes such as railway trains, electric trains, automobiles, ships, and aircrafts, this laminate can be suitably used in front windshields, rear windows, roof glass, side glass and the like.

The laminate, such as laminated glass, comprising the intermediate laminate of the present invention comprising a half mirror layer can have a function of efficiently reflecting video light projected from a projector or the like while permitting direct transmission of outside light. Hence, this laminate can be suitably used in, for example, combiners for head-up displays (HUD) which display various pieces of information such as basic information (e.g., vehicle speeds), road conditions, and information calling for attention. The "combiner" is a transparent plate-like member for use in displaying various pieces of information described above in HUD.

The laminate of the present invention used in HUD produces, for example, effects as mentioned below. A concave mirror, one of the members constituting HUD, is currently installed in the inside of a vehicle in front of a driver seat. A concave mirror function can be imparted to a front windshield by using the laminate comprising the intermediate laminate of the present invention comprising a half mirror layer and thereby optically designing the shape of the concave mirror as the pattern of the first cross-linked cured resin layer. In this case, HUD-related member space in front of a driver seat can be decreased, which is preferred.

In the case of using the laminate, such as laminated glass, comprising the intermediate laminate of the present invention comprising a half mirror layer in partition glass inside buildings and outdoor building glass, etc., video light projected from a projector or the like can be efficiently reflected. Furthermore, the video light may be output in an arbitrary direction during the reflection. Hence, a projector or the like may be placed near the laminate. Thus, the degree of freedom of placement of a projector or the like is high.

In addition, the laminate of the present invention, such as laminated glass, comprising the intermediate laminate of the present invention can also be used as a member for video display in projection mapping which projects computer graphics (CG) on space or the like using screening equipment such as a projector, and, if necessary, synchronizes video with sound.

**Examples**

Hereinafter, Examples according to the present invention and Comparative Examples will be described.

[Evaluation item and evaluation method]

Evaluation items and evaluation methods are as follows.

(Evaluation of polyvinyl acetal resin)

<Hydroxy group content>

The hydroxy group content of a polyvinyl acetal resin or a polyvinyl acetal resin mixture was determined in accordance with JIS K 6728.

<Viscosity>

The viscosity of a polyvinyl acetal resin or a polyvinyl acetal resin mixture was measured under conditions of 20°C and 30 rpm using a Brookfield (type B) viscometer as to a solution adjusted to 10% by mass using a mixed solvent of toluene and ethanol mixed at a mass ratio of 1:1 as a solvent.

(Evaluation of film)

<Total light transmittance>

The total light transmittance was measured in accordance with JIS K 7361-1 using a haze meter (manufactured by Murakami Color Research Laboratory Co., Ltd., HM-150).

<Ultraviolet transmittance>

Transmittances at respective wavelengths of 380 nm, 390 nm, and 400 nm were measured using a transmittance evaluation spectrophotometer (U-4000, manufactured by Hitachi, Ltd.). An average value of these transmittances was used as the ultraviolet transmittance.

(Evaluation of film and cross-linked cured resin)

<Refractive index>

The refractive index was measured on the basis of JIS K 7142.

(Evaluation of intermediate laminate)

<Thickness of light reflection layer>

Epoxy resin was attached throughout both surfaces and side faces of an intermediate laminate comprising a light reflection layer and wholly hardened by resin curing at ordinary temperature. Subsequently, the hardened intermediate laminate was cut in a thickness direction using a microtome ("LEICA EM UC6/FC6" manufactured by Leica Microsystems GmbH) to prepare a thin-film section for cross-sectional observation. The surface (exposed cross section) of the obtained thin-film section was observed under a reflection electron microscope ("JSM-7600F" manufactured by JEOL Ltd.) to determine the maximum thickness of each dielectric layer in the light reflection layer.

<Appearance evaluation of first adhesive layer (confirmation of presence or absence of wrinkle)>

A first adhesive layer was coated with a curable composition, and a coating layer was cross-linked and cured to form a first cross-linked cured resin layer. The first adhesive layer was visually observed as to a test piece of the resulting two-layer structure to confirm the presence or absence of wrinkles formed due to cure shrinkage. Appearance evaluation was conducted according to the following criteria.

Z1: The first adhesive layer was flat without wrinkles.
Z2: Small wrinkles were seen in the first adhesive layer.

(Evaluation of laminate (laminated glass))

<Heat slide test>

Laminate f (laminated glass) was cut into a size with a width of 100 mm and a length of 270 mm. A 1 kg weight was attached to the surface of a second glass plate in contact with a second adhesive layer, on the side opposite to the second adhesive layer side. Only a first glass plate in contact with a first adhesive layer was fixed to a jig so as not to bring the laminate f (laminated glass) into contact with a floor. Then, the laminate f (laminated glass) was left standing for 120 hours in a thermostat of 100°C. After the completion of the test, the length of move of the second glass plate in contact with the second adhesive layer from the position before the test was measured. Evaluation was conducted according to the following criteria.

Y1: The length of move was less than 20 mm.
Y2: The length of move was 20 mm or more.

<Falling ball test (impact resistance)>

The falling ball test was carried out on the basis of JIS R 3212. Evaluation was conducted according to the following criteria.

XI: Although a glass plate was broken, glass chips were hardly scattered.
X2: A glass plate was broken, and glass chips were scattered.

<Weather resistance test>

A 10 cm × 10 cm test piece was cut out of laminate f (laminated glass). The weather resistance test was carried out under the following conditions.

Testing apparatus: Eye Super UV Tester (manufactured by Iwasaki Electric Co., Ltd., SUV-F11 model),
Ultraviolet intensity: 100 mWZcm$^2$,
Wavelength: 295-450 nm,
Black panel temperature: 63°C,
Irradiation distance: 235 mm,
Irradiation time: 300 hours.

After the completion of the test, the test piece was visually observed. Appearance evaluation was conducted according to the following criteria.

W1: Both first and second cross-linked cured resin layers remained colorless.
W2: Yellowing, even albeit slight, was seen in a first or second cross-linked cured resin layer.

<Transmission visibility>

Laminate f (laminated glass) was visually observed and evaluated for its transmission visibility according to the following criteria.

V1: The edges of an adhesive layer and a cross-linked cured resin layer were not seen because of high translucency.
V2: Light whitish cloudiness was seen at a site where a cross-linked cured resin layer was absent, when a glass surface was visually observed from the front and/or in a diagonal direction.
V3: The edges of a cross-linked cured resin layer were visible as slightly dark lines.
V4: A dilute Moire pattern was visible at a portion of a site where an adhesive layer was present, when a glass surface was visually observed from the front and/or in a diagonal direction.
V5: The edges of an adhesive layer were clearly visible as dark lines.

[Polyvinyl acetal resin]

Three resins (A1-1) to (A1-3) having the physical properties shown in Table 1 were provided as polyvinyl acetal resins. All of these resins are polyvinyl butyral resins (PVB) obtained by the acetalization of polyvinyl alcohol resin by a known method using n-butyraldehyde.
In the table, "Viscosity" is a viscosity measured under conditions of 20°C and 30 rpm using a Brookfield (type B) viscometer as to a solution adjusted to 10% by mass using a mixed solvent of toluene and ethanol mixed at a mass ratio of 1:1 as a solvent.

[Table 1]

| Polyvinyl acetal resin (PVB) | Hydroxy group content mass %] | Degree of acetalization [mass %] | Acetyl group content [mass %] | Viscosity [mPa·s] |
|---|---|---|---|---|
| A1-1 | 19.8 | 79.2 | 1.0 | 152 |
| A1-2 | 20.1 | 79.0 | 0.9 | 1410 |
| A1-3 | 28.0 | 71.0 | 1.0 | 300 |

[Production Examples 1 to 5] "Production Examples of polyvinyl acetal resin mixture and film containing same"

Two of the polyvinyl acetal resins (A1-1) to (A1-3) were blended according to the composition shown in Table 2, melt-kneaded at 250°C using a twin-screw extruder (manufactured by Technovel Corp., KZW20TW-45MG-NH-600), and extruded to produce polyvinyl acetal resin mixtures (A2-1) to (A2-5). The viscosity (viscosity measured under conditions of 20°C and 30 rpm using a Brookfield (type B) viscometer as to a solution adjusted to 10% by mass using a mixed solvent of toluene and ethanol mixed at a mass ratio of 1:1 as a solvent) of each resin mixture thus obtained was measured.
Two of the polyvinyl acetal resins (A1-1) to (A1-3), a plasticizer (K-1) (triethylene glycol-bis-(2-ethyl hexanoate (3G8)), and an ultraviolet absorber (U-1) ("TINUVIN326" manufactured by BASF SE) were blended according to the composition shown in Table 2, melt-kneaded at 260°C using a twin-screw extruder (manufactured by Technovel Corp., KZW20TW-45MG-NH-600), and extruded into a film from a T die. The film was cooled using a plurality of cooling rolls and taken over with a pair of take-over rolls to produce polyvinyl acetal resin-containing films (S1) to (S5) having the thickness shown in Table 2.
The polyvinyl acetal resin mixtures (A2-1) to (A2-5) were adjusted for viscosity measurement, and their composition was the same as that of the polyvinyl acetal resin mixtures contained in the films.
In the table, the amount of the ultraviolet absorber added is the amount of addition (phr) with respect to the total amount of the polyvinyl acetal resin and the plasticizer.
Results of evaluating the film obtained in each example are shown in Table 2.

[Production Examples 6 to 10] "Production Examples of film containing polyvinyl acetal resin"

One of the polyvinyl acetal resins (A1-1) to (A1-3), a plasticizer (K-1) (triethylene glycol-bis-(2-ethyl hexanoate (3G8)), and an ultraviolet absorber (U-1) (manufactured by BASF SE, TINUVIN326) were blended according to the composition shown in Table 2. Polyvinyl acetal resin-containing films (S6), (S7), and (P1) to (P3) having the thickness shown in Table 2 were produced in the same manner as in Production Examples 1 to 5.

Results of evaluating the film obtained in each example are shown in Table 2.

[Table 2]

| | | | Production Example 1 | Production Example 2 | Production Example 3 | Production Example 4 | Production Example 5 | Production Example 6 | Production Example 7 | Production Example 8 | Production Example 9 | Production Example 10 |
|---|---|---|---|---|---|---|---|---|---|---|---|---|
| Polyvinyl acetal resin (mixture) | | | A2-1 | A2-2 | A2-3 | A2-4 | A2-5 | A1-1 | A1-3 | AI-2 | AI-2 | A1-2 |
| | A1-1(PVB) | [parts by mass] | 50 | 50 | 42 | 36 | 36 | 100 | | | | |
| | A1-2(PVB) | [parts by mass] | 50 | 50 | 42 | 36 | 36 | | | 72 | 100 | 72 |
| | A1-3(PVB) | [parts by mass] | | | | | | | 100 | | | |
| | Viscosity | [mPa·s] | 444 | 444 | 444 | 444 | 444 | 152 | 300 | 1410 | 1410 | 1410 |
| Additive | | | | | | | | | | | | |
| | Plasticizer (K-1) | [parts by mass] | 0 | 0 | 16 | 28 | 28 | 0 | 0 | 28 | 0 | 28 |
| | Ultraviolet absorber (U-1) | [phr] | 0 | 0.15 | 0 | 0 | 0 | 0 | 0 | 0.15 | 0.15 | 0 |
| Film | | | S1 | S2 | S3 | S4 | S5 | S6 | S7 | P1 | P2 | P3 |
| | Thickness | μm] | 50 | 50 | 50 | 50 | 300 | 50 | 50 | 760 | 760 | 760 |
| | Total light transmittanc | [%] | 88 | 88 | 88 | 88 | 88 | 88 | 88 | 88 | 88 | 88 |
| | Ultraviolet transmittanc | [%] | 100 | 39 | 100 | 100 | 100 | 100 | 100 | 0.25 | 0.25 | 100 |
| | Refractive index | [-] | 1.490 | 1.490 | 1.487 | 1.485 | 1.485 | 1.490 | 1.490 | 1.485 | 1.490 | 1.485 |

EP 3 858 611 A1

22

[Provision of ionomer film]

Commercially available ionomer films were provided.

(S8) Film of an ionomer of an ethylene-(meth)acrylic acid copolymer; "SentryGlas(R) Interlayer" manufactured by Kuraray Co., Ltd. (containing no plasticizer and containing no ultraviolet absorber)
(P4) Film of an ionomer of an ethylene-(meth)acrylic acid copolymer, "SentryGlas(R) Interlayer" manufactured by Kuraray Co., Ltd. (containing no plasticizer, ultraviolet absorber content: 0.15 phr with respect to the ionomer)

Results of evaluating each ionomer film are shown in Table 3.

[Table 3]

| Ionomer film | | | S8 | P4 |
|---|---|---|---|---|
| | Thickness | [μm] | 100 | 760 |
| | Total light transmittance | [%] | 88 | 88 |
| | Ultraviolet transmittance | [%] | 100 | 0.25 |
| | Refractive index | [%] | 1.490 | 1.490 |

[Provision of polyethylene terephthalate (PET) film]

A commercially available PET film was provided. (PET1) Transparent PET film "A-4300" manufactured by Toyobo Co., Ltd. (thickness: 150 μm, containing no plasticizer and containing no ultraviolet absorber)

[Production Examples 21 and 22]

Light Acrylate HOA-MS (manufactured by Kyoeisha Chemical Co., Ltd.), ARONIX M110 (manufactured by Toagosei Co., Ltd.), Art-Resin UN-9000H (manufactured by Negami Chemical Industrial Co., Ltd.), and a photopolymerization initiator Irgacure 184 (manufactured by IGM Resins B.V.) were blended according to the composition shown in Table 4 to prepare cross-linkable curable compositions (B1) and (B2).
In the table, the amount of the photopolymerization initiator added is the amount of addition (phr) with respect to the total amount of the monomers.
The obtained cross-linkable curable composition was injected to a mold and cured by irradiation with ultraviolet ray (central wavelength: 365 nm) for 10 seconds. The refractive index of the obtained cured product (cross-linked cured resin) in a film form was measured. Evaluation results are shown in Table 4.

[Table 4]

| | | | Production Example 21 | Production Example 22 |
|---|---|---|---|---|
| Cross-linkable curable composition | | | B1 | B2 |
| | [HOA-MS | [parts by mass] | 70 | 15 |
| | M-110 | [parts by mass] | 15 | 70 |
| | UN-9000H | [parts by mass] | 15 | 15 |
| | Igarcure184 | [phr] | 1 | 1 |
| Cross-linked cured resin | | | | |
| | Refractive index | [-] | 1.490 | 1.551 |

[Example 1]

The surface of a copper plate was subjected to cutting work by a known method to form an inverted pattern of a circular Fresnel lens-shaped convex portion having a lens diameter of 10 cm and a lens pitch of 300 μm. Nickel plating treatment was further performed thereon to prepare a metal mold.
One of the surfaces of the polyvinyl acetal resin-containing film (S1) as a material for the first adhesive layer was coated with the cross-linkable curable composition (B1) using a slot die. Subsequently, the pattern surface of the metal mold was impressed on the surface of the coating layer comprising the cross-linkable curable composition. In this state, the film (S1) side was irradiated with ultraviolet ray (central wavelength: 365 nm) under conditions involving an irradiance of 500 mJ/cm$^2$ using a metal halide lamp so that the coating layer was cross-linked and cured to form a first cross-linked cured resin layer. Subsequently, an intermediate laminate (b1) having a two-layer structure consisting of the first adhesive layer and the first cross-linked cured resin layer was removed from the metal mold.

Main production conditions and evaluation results are shown in Table 5.

Next, a size of 15 cm long and 15 cm wide was cut out of the intermediate laminate (b1). This piece was arranged on a first glass plate of 30 cm long, 30 cm wide, and 3 mm thick. This arrangement was performed such that the first adhesive layer of the intermediate laminate (b1) was in contact with the glass plate and the center of the intermediate laminate (b1) agreed with the center of the glass plate. A film (P1) of 30 cm long and 30 cm wide as a material for the second adhesive layer, and a second glass plate of 30 cm long, 30 cm wide, and 3 mm thick were layered in this order on the intermediate laminate (b1) to obtain a preliminary laminate.

Subsequently, the preliminary laminate was put in a vacuum bag. The inside pressure of the vacuum bag was reduced at room temperature for 15 minutes using a vacuum pump. While the vacuum state was maintained, the vacuum bag was then warmed to 100°C and heated for 60 minutes (preliminary pressure bonding). The temperature was lowered to ordinary temperature. Then, the pressure was brought back to ordinary pressure. The laminate after the preliminary pressure bonding was taken out.

Subsequently, the laminate after the preliminary pressure bonding was put in an autoclave and treated at 140°C at 1.2 MPa for 30 minutes to prepare laminate f1 (laminated glass).

Main production conditions and evaluation results are shown in Table 5.

[Examples 2 to 7]

Intermediate laminates (b2) to (b7) and laminates (f2) to (f7) (laminated glass) were prepared in the same manner as in Example 1 except that the PVB-containing film shown in Table 5 was used as a material for the first adhesive layer.

Main production conditions and evaluation results are shown in Table 5.

[Example 8]

An intermediate laminate (b8) and a laminate (f8) (laminated glass) were prepared in the same manner as in Example 1 except that the cross-linkable curable composition (B2) was used as a material for the second cross-linked cured resin layer.

Main production conditions and evaluation results are shown in Table 5.

[Example 9]

An intermediate laminate (b9) and a laminate (f9) (laminated glass) were prepared in the same manner as in Example 1 except that the ionomer film (S8) was used as a material for the first adhesive layer and the PVB-containing film (P3) was used as a material for the second adhesive layer.

Main production conditions and evaluation results are shown in Table 5.

[Table 5]

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Intermediate laminate b (first cross-linkable curable resin layer/first adhesive layer) | | | | b1 | b2 | b3 | b4 | b5 | b6 | b7 | b8 | b9 |
| First cross-linked cured resin layer | Cross-linkable curable composition | | | B1 | B1 | B1 | B1 | B1 | B1 | B1 | B2 | B1 |
| | Refractive index of cross-linked cured resin | [-] | | 1.490 | 1.490 | 1.490 | 1.490 | 1.490 | 1.490 | 1.490 | 1.551 | 1.490 |
| | Refractive index difference $|n(A)-n(B)|$ | [-] | | 0 | 0 | 0 | 0 | 0 | 0 | 0 | 0.061 | 0 |
| First adhesive layer | | | | S1 | S2 | S3 | S4 | S5 | S6 | S7 | S1 | S8 |
| | Resin constituting first adhesive layer | | | PVB | PVB | PVB | PVB | PVB | PVB | PVB | PVB | Ionomer |
| | Viscosity of PVB or PVB mixture | [mPa·s] | | 444 | 444 | 444 | 444 | 444 | 152 | 300 | 444 | - |
| | Plasticizer content | [wt%] | | 0 | 0 | 15 | 28 | 28 | 0 | 0 | 0 | 0 |
| | Thickness of first adhesive layer | [μm] | | 50 | 50 | 50 | 50 | 300 | 50 | 50 | 50 | 100 |
| | Ultraviolet transmittance | [%] | | 100 | 39 | 100 | 100 | 100 | 100 | 100 | 100 | 100 |
| | Hydroxy group content | [mass %] | | 20 | 20 | 20 | 20 | 20 | 20 | 28 | 20 | 20 |
| Evaluation | Appearance evaluation of first adhesive layer (presence or absence of wrinkle) | | | Z1 | Z1 | Z1 | Z2 | Z1 | Z1 | Z1 | Z1 | Z1 |
| Laminate f (laminated glass) (glass/intermediate laminate/glass) | | | | f1 | f2 | f3 | f4 | f5 | f6 | f7 | f8 | f9 |

(continued)

| Second adhesive layer | | | P1 | P1 | P1 | P1 | | P1 | P1 | P1 | P3 |
|---|---|---|---|---|---|---|---|---|---|---|---|
| | Constituting resin | | PVB | PVB | PVB | PVB | PVB | PVB | PVB | PVB | PVB |
| | Thickness | [μm] | 760 | 760 | 760 | 760 | 760 | 760 | 760 | 760 | 760 |
| | Ultraviolet transmittance | [%] | 0.25 | 0.25 | 0.25 | 0.25 | 0.25 | 0.25 | 0.25 | 0.25 | 0.25 |
| | Plasticizer content | [mass %] | 28 | 28 | 28 | 28 | 28 | 28 | 28 | 28 | 0 |
| | Ultraviolet transmittance | [%] | 0.25 | 0.25 | 0.25 | 0.25 | 0.25 | 0.25 | 0.25 | 0.25 | 0.25 |
| | Hydroxy group content | [mass %] | 20 | 20 | 20 | 20 | 20 | 20 | 20 | 20 | 20 |
| Evaluation | | | | | | | | | | | |
| | Heat slide test (slippage of glass) | | Y1 | Y1 | Y1 | Y1 | Y1 | Y2 | Y1 | Y1 | Y1 |
| | Falling ball test (impact resistance) | | X1 | X1 | X1 | X1 | X1 | X1 | X1 | X1 | X1 |
| | weather resistance test (presence or absence of yellowing of cross-linked cured resin) | | W1 | W1 | W1 | W1 | W1 | W1 | W1 | W1 | W1 |
| | Transmission visibility | | V1 | V1 | V1 | V4 | V1 | V1 | V2 | V3 | V1 |

[Example 10]

On the first cross-linked cured resin layer of the intermediate laminate (b1) obtained in Example 1, a total of 6 layers were vapor-deposited by the vacuum vapor deposition method such that a layer of $TiO_2$ (refractive index: 2.493) (first dielectric layer) and a layer of $SiO_2$ (refractive index: 1.457) (second dielectric layer) were alternated, to form a light reflection layer (half mirror layer) consisting of a multilayer dielectric film. In this way, an intermediate laminate (c10) having a three-layer structure of the first adhesive layer, the first cross-linked cured resin layer, and the light reflection layer (half mirror layer) was prepared. The maximum thickness of each dielectric layer was 160 nm, and the total thickness of the light reflection layer was 800 nm.

In the same manner as in Example 1 except for using the obtained intermediate laminate (c10), the first glass plate was arranged beneath the first adhesive layer, and the PVB-containing film (P1) and the second glass plate were layered in this order on the light reflection layer, followed by two-stage heat pressure bonding to prepare a laminate (f10) (laminated glass).

Main production conditions and evaluation results are shown in Table 6.

[Example 11]

The light reflection layer of the intermediate laminate (c10) obtained in Example 10 was coated with the cross-linkable curable composition (B1). A nickel metal plate having a mirrored surface was impressed thereon so as to bring the mirrored surface into contact with the coating surface. In this state, the film (S1) side was irradiated with ultraviolet ray (central wavelength: 365 nm) under conditions involving an irradiance of 500 mJ/cm$^2$ using a metal halide lamp so that the coating layer was cross-linked and cured to form a second cross-linked cured resin layer. Subsequently, an intermediate laminate (d11) having a four-layer structure consisting of the first adhesive layer, the first cross-linked cured resin layer, the light reflection layer, and the second cross-linked cured resin layer was removed from the nickel metal plate.

In the same manner as in Example 1 except for using the obtained intermediate laminate (d11), the first glass plate was arranged beneath the first adhesive layer, and the PVB-containing film (P1) and the second glass plate were layered in this order on the second cross-linked cured resin layer, followed by two-stage heat pressure bonding to prepare a laminate (f11) (laminated glass).

Main production conditions and evaluation results are shown in Table 6.

[Example 12]

An intermediate laminate (d12) having a four-layer structure of the first adhesive layer, the first cross-linked cured resin layer, the light reflection layer, and the second cross-linked cured resin layer was prepared in the same manner as in Example 11 except that the cross-linkable curable composition (B2) was used as a material for the second cross-linked cured resin layer.

A laminate (f11) (laminated glass) was prepared in the same manner as in Example 11 except that the obtained intermediate laminate (d12) was used.

Main production conditions and evaluation results are shown in Table 6.

[Examples 13 and 14]

Laminates (f13) and (f14) (laminated glass) were prepared in the same manner as in Example 11 except that the PVB-containing resin film (P2) or (P3) was used as a material for the second adhesive layer.

Main production conditions and evaluation results are shown in Table 6.

[Example 15]

An intermediate laminate (c15) having a three-layer structure of the first adhesive layer, the first cross-linked cured resin layer, and the light reflection layer was prepared by forming the light reflection layer in the same manner as in Example 10 except that the intermediate laminate (b9) obtained in Example 9 was used instead of the intermediate laminate (b1) obtained in Example 1.

Further, in the same manner as in Example 11, a second cross-linked cured resin layer having a mirrored surface was formed on the light reflection layer of the obtained intermediate laminate (c15) to form an intermediate laminate (d15) having a four-layer structure of the first adhesive layer, the first cross-linked cured resin layer, the light reflection layer, and the second cross-linked cured resin layer.

Further, a laminate (f15) (laminated glass) was prepared in the same manner as in Example 11 except that the obtained intermediate laminate (d15) was used and the ionomer film (P4) was used as a material for the second adhesive layer.

Main production conditions and evaluation results are shown in Table 6.

[Table 6]

| | | | Example 10 | Example 11 | Example 12 | Example 13 | Example 14 | Example 15 |
|---|---|---|---|---|---|---|---|---|
| Intermediate laminate b (first cross-linkable curable resin layer/first adhesive layer) | | | b1 | b1 | b1 | b1 | b1 | b9 |
| First cross-linked cured resin layer | | | | | | | | |
| | Cross-linkable curable composition | | B1 | B1 | B1 | B1 | B1 | B1 |
| | Refractive index of cross-linked cured resin | [-] | 1.490 | 1.490 | 1.490 | 1.490 | 1.490 | 1.490 |
| | Refractive index difference n (A)-n(B) | [-] | 0 | 0 | 0 | 0 | 0 | 0 |
| First adhesive layer | | | S1 | S1 | S1 | S1 | S1 | S8 |
| | Resin constituting first adhesive layer | | PVB | PVB | PVB | PVB | PVB | Ionomer |
| | Viscosity of PVB or PVB mixture | [mPa·s] | 444 | 444 | 444 | 444 | 444 | - |
| | Plasticizer content | [wt%] | 0 | 0 | 0 | 0 | 0 | 0 |
| | Thickness of first adhesive layer | [μm] | 50 | 50 | 50 | 50 | 50 | 100 |
| | Ultraviolet transmittance | [%] | 100 | 100 | 100 | 100 | 100 | 100 |
| Evaluation | | | | | | | | |
| | Appearance evaluation of first adhesive layer (presence or absence of wrinkle) | | Z1 | Z1 | Z1 | Z1 | Z1 | Z1 |
| Intermediate laminate c (light reflection layer/first cross-linkable curable resin layer/ first adhesive layer) | | | c10 | c10 | c10 | c10 | c10 | c15 |
| Light reflection layer | | | | | | | | |
| | Material for light reflection layer | | SiO2/TiO2 | SiO2/TiO2 | SiO2/TiO2 | SiO2/TiO2 | SiO2/TiO2 | SiO2/TiO2 |
| | Maximum thickness of each dielectric layer | [nm] | 160 | 160 | 160 | 160 | 160 | 160 |
| | Total thickness | [nm] | 800 | 800 | 800 | 800 | 800 | 800 |
| Intermediate laminate d (second cross-linkable curable resin layer/light reflection layer/first cross-linkable curable resin layer/first adhesive layer) | | | - | d11 | d12 | d11 | d11 | d15 |

EP 3 858 611 A1

(continued)

| Second cross-linked cured resin layer | | | | | | | | |
|---|---|---|---|---|---|---|---|---|
| | Material for cross-linked cured resin | | - | B1 | B2 | B1 | B1 | B1 |
| | Refractive index of cross-linked cured resin | [-] | - | 1.490 | 1.551 | 1.490 | 1.490 | 1.490 |
| | Refractive index difference n (B)-n(D) | [-] | - | 0 | 0.061 | 0 | 0 | 0 |
| Laminate f (laminated glass) (glass/intermediate laminate/glass) | | | f10 | f11 | f12 | f13 | f14 | f15 |
| Second adhesive layer | | | P1 | P1 | P1 | P2 | P3 | P4 |
| | Constituting resin | | PVB | PVB | PVB | PVB | PVB | Ionomer |
| | Thickness | [$\mu$m] | 760 | 760 | 760 | 760 | 760 | 760 |
| | Ultraviolet transmittance | [%] | 0.25 | 0.25 | 0.25 | 0.25 | 100 | 0.25 |
| | Plasticizer content | [mass %] | 28 | 28 | 28 | 0 | 28 | 0 |
| Evaluation | | | | | | | | |
| | Heat slide test (slippage of glass) | | Y1 | Y1 | Y1 | Y1 | Y1 | Y1 |
| | Falling ball test (impact resistance) | | X1 | X1 | X1 | X2 | X1 | X1 |
| | Weather resistance test (presence or absence of yellowing of cross-linked cured resin) | | W1 | W1 | W1 | W1 | W2 | W1 |
| | Transmission visibility | | V1 | V1 | V3 | V1 | V1 | V1 |

[Comparative Example 1]

An intermediate laminate (b21) and a laminate (f21) (laminated glass) were prepared in the same manner as in Example 1 except that the PET film (PET1) was used as a material for the first adhesive layer.
Main production conditions and evaluation results are shown in Table 7.
In the obtained laminate (laminated glass) (f21), the edges of the PET film were clearly visible as dark lines, and the transmission visibility was significantly poor.

[Comparative Example 2]

An intermediate laminate (b22) was prepared in the same manner as in Comparative Example 1 except that the cross-linkable curable composition (B2) was used as a material for the second cross-linked cured resin layer.
Further, an intermediate laminate (c22) having a three-layer structure of the first adhesive layer, the first cross-linked cured resin layer, and the light reflection layer was prepared by forming the light reflection layer in the same manner as in Example 10 except that the obtained intermediate laminate(b22) was used.
Further, in the same manner as in Example 11, a second cross-linked cured resin layer having a mirrored surface was formed on the light reflection layer of the obtained intermediate laminate (c22) to form an intermediate laminate (d22) having a four-layer structure of the first adhesive layer, the first cross-linked cured resin layer, the light reflection layer, and the second cross-linked cured resin layer.
Further, a laminate (f22) (laminated glass) was prepared in the same manner as in Example 11 except that the obtained intermediate laminate (d22) was used.
Main production conditions and evaluation results are shown in Table 7.
In the obtained laminate (laminated glass) (f22), the edges of the PET film were clearly visible as dark lines, and the transmission visibility was significantly poor.

[Table 7]

| | | | Comparative Example 1 | Comparative Example 2 |
|---|---|---|---|---|
| Intermediate laminate b (first cross-linkable curable resin layer/first adhesive layer) | | | b21 | b22 |
| First cross-linked cured resin layer | | | | |
| | Cross-linkable curable composition | | B1 | B2 |
| | Refractive index of cross-linked cured resin | [-] | 1.490 | 1.490 |
| | Refractive index difference n (A)-n(B) | [-] | 0 | 0 |
| First adhesive layer | | | PET1 | PET1 |
| | Resin constituting first adhesive layer | | PET | PET |
| | Plasticizer content | [wt%] | 0 | 0 |
| | Thickness of first adhesive layer | [$\mu$m] | 50 | 50 |
| | Ultraviolet transmittance | [%] | 100 | 100 |
| Evaluation | | | | |
| | Appearance evaluation of first adhesive layer (presence or absence of wrinkle) | | Z1 | Z1 |
| Intermediate laminate c (light reflection layer/first cross-linkable curable resin layer/first adhesive layer) | | | - | c22 |
| Light reflection layer | | | | |
| | Material for light reflection layer | | - | SiO2/TiO2 |

(continued)

| Light reflection layer | | | | |
|---|---|---|---|---|
| | Maximum thickness of each dielectric layer | [nm] | - | 160 |
| | Total thickness | [nm] | - | 800 |
| Intermediate laminate d (second cross-linkable curable resin layer/light reflection layer/first cross-linkable curable resin layer/first adhesive layer) | | | - | d22 |
| Second cross-linked cured resin layer | | | | |
| Material for cross-linked cured resin | | | - | B1 |
| | Refractive index of cross-linked cured resin | [-] | - | 1.490 |
| | Refractive index difference n (B)-n(D) | [-] | - | 0 |
| Laminate f (laminated glass) (glass/intermediate laminate/glass) | | | f21 | f22 |
| Second adhesive layer | | | P1 | P1 |
| Constituting resin | | | PVB | PVB |
| | Thickness | [μm] | 760 | 760 |
| | Ultraviolet transmittance | [%] | 0.25 | 0.25 |
| | Plasticizer content | [mass %] | 28 | 28 |
| Evaluation | | | | |
| | Heat slide test (slippage of glass) | | Y1 | Y1 |
| | Falling ball test (impact resistance) | | X1 | X1 |
| | Weather resistance test (presence or absence of yellowing of cross-linked cured resin) | | W1 | W1 |
| | Transmission visibility | | V5 | V5 |

[Summary of results]

In Examples 1 to 15, intermediate laminates were produced which comprised a first adhesive layer and a first cross-linked cured resin layer laminated directly with no other layer interposed therebetween, and had a Fresnel lens pattern as a fine concave and convex pattern on the surface of the first cross-linked cured resin layer.

It was confirmed that the first cross-linked cured resin layer can be simply formed by a method comprising a coating step and a cross-linking and curing step; and the imparting of the fine concave and convex pattern to the first cross-linked cured resin layer can be simply carried out by transferring a pattern to the surface of a coating layer before cross-linking and curing. A fine concave and convex pattern can be formed as an arbitrary pattern on the surface of the first cross-linked cured resin layer and can be freely designed according to the functions to be imparted.

Laminated glass having a light gathering function based on the Fresnel lens pattern was able to be obtained by a simple method using the obtained intermediate laminate.

In Examples 1 to 15, laminated glass having a light gathering function was obtained because a concave mirror was formed with the Fresnel lens pattern. Laminated glass having a light diffusion function may be obtained by forming a convex mirror based on the Fresnel lens pattern.

It was confirmed that laminated glass having various functions can be provided by using the intermediate laminate of the present invention; and the functions of the laminated glass can be freely designed.

By appropriately designing the composition and physical properties of each layer of the intermediate laminate, the misalignment of glass at high temperatures was suppressed, and laminated glass excellent in weather resistance and excellent in transmission visibility was able to be produced.

In Comparative Examples 1 and 2, a PET film was used as a material for the first adhesive layer. Therefore, its edges were clearly visible, and the transmission visibility was significantly poor.

The present invention is not limited by the embodiments and Examples described above, and various changes or modifications can be appropriately made in design without departing from the spirit of the present invention.

This application is based upon and claims the benefit of priority from Japanese Patent Application No. 2018-181056, filed on September 26, 2018, the entire disclosure of which is incorporated herein in its entirety by reference.

Reference Signs List

1 to 4, 5A and 5B: Intermediate laminate
6A and 6B: Laminate
11: First adhesive layer
12: First cross-linked cured resin layer
13: Functional layer
14: Second cross-linked cured resin layer
15: Second adhesive layer
21 and 22: Translucent base material

**Claims**

1. An intermediate laminate comprising a first adhesive layer and a first cross-linked cured resin layer laminated directly with no other layer interposed therebetween,
   the first adhesive layer comprising a polyvinyl acetal resin and/or an ionomer resin.

2. The intermediate laminate according to claim 1, wherein the first adhesive layer comprises a polyvinyl acetal resin and more than 0% by mass and less than 20% by mass of a plasticizer.

3. The intermediate laminate according to claim 1 or 2, wherein the first adhesive layer comprises a polyvinyl acetal resin having a viscosity of more than 200 mPa·s measured under conditions of 20°C and 30 rpm using a Brookfield (type B) viscometer as to a solution adjusted to 10% by mass using a mixed solvent of toluene and ethanol mixed at a mass ratio of 1:1 as a solvent.

4. The intermediate laminate according to any one of claims 1 to 3, wherein the first adhesive layer comprises a polyvinyl acetal resin having a hydroxy group content of 6 to 26% by mass.

5. The intermediate laminate according to any one of claims 1 to 4, wherein a resin constituting the first cross-linked cured resin layer comprises a cured product of an active energy ray curable composition.

6. The intermediate laminate according to any one of claims 1 to 5, wherein the first cross-linked cured resin layer has a fine concave and convex pattern on a surface on the side opposite to the first adhesive layer side.

7. The intermediate laminate according to claim 6, wherein the fine concave and convex pattern comprises a periodic pattern having a pattern pitch within a range of 10 to 500 $\mu$m.

8. The intermediate laminate according to claim 6, wherein the fine concave and convex pattern is a lens pattern comprising one or more Fresnel lens-shaped or microlens-shaped convex portions.

9. The intermediate laminate according to any one of claims 1 to 8, wherein refractive indexes, measured in accordance with JIS7142, of a resin constituting the first adhesive layer and a resin constituting the first cross-linked cured resin layer satisfy the following expression (1):

$$|n(A) - n(B)| \leq 0.05 \ldots \text{Expression (1)},$$

wherein n(A) represents the refractive index of the resin constituting the first adhesive layer, and n(B) represents the refractive index of the resin constituting the first cross-linked cured resin layer.

10. The intermediate laminate according to any one of claims 1 to 9, wherein a thickness of the first adhesive layer is 10 to 450 μm.

11. The intermediate laminate according to any one of claims 1 to 10, further comprising a light reflection layer on the first cross-linked cured resin layer, the light reflection layer reflecting at least a portion of light.

12. The intermediate laminate according to claim 11, wherein the light reflection layer consists of one or two or more dielectric layers.

13. The intermediate laminate according to claim 12, wherein the light reflection layer has a dielectric layer thickness of 3 to 200 nm and a total thickness of 6 to 2000 nm.

14. The intermediate laminate according to any one of claims 1 to 10, further comprising a second cross-linked cured resin layer on the first cross-linked cured resin layer.

15. The intermediate laminate according to any one of claims 11 to 13, further comprising a second cross-linked cured resin layer on the light reflection layer.

16. The intermediate laminate according to claim 14 or 15, wherein a resin constituting the second cross-linked cured resin layer comprises a cured product of an active energy ray curable composition.

17. The intermediate laminate according to any one of claims 14 to 16, wherein refractive indexes, measured in accordance with JIS7142, of a resin constituting the first cross-linked cured resin layer and a resin constituting the second cross-linked cured resin layer satisfy the following expression (2):

$$|n(D) - n(B)| \leq 0.05 \ldots \text{Expression (2)},$$

wherein n(B) represents the refractive index of the resin constituting the first cross-linked cured resin layer, and n(D) represents the refractive index of the resin constituting the second cross-linked cured resin layer.

18. The intermediate laminate according to any one of claims 1 to 17, further comprising a second adhesive layer on a surface of the intermediate laminate on the side opposite to the first adhesive layer side,
the second adhesive layer comprising a combination of a polyvinyl acetal resin and 20% by mass or more of a plasticizer, and/or an ionomer resin.

19. The intermediate laminate according to claim 18, wherein the second adhesive layer comprises a polyvinyl acetal resin having a hydroxy group content of 6 to 26% by mass.

20. A laminate comprising an intermediate laminate according to claim 18 or 19 and a pair of translucent base materials holding the intermediate laminate therebetween.

21. The laminate according to claim 20, wherein an ultraviolet transmittance is 20% or less.

22. The laminate according to claim 20 or 21, wherein the translucent base material is a glass base material or a translucent resin base material.

23. A glazing material comprising a laminate according to any one of claims 20 to 22.

24. The glazing material according to claim 23 for combiners for head-up displays.

25. A method for producing an intermediate laminate according to claim 6, comprising the steps of:

providing a resin film as the first adhesive layer (S1);
coating the resin film with a cross-linkable curable composition (S2);
impressing a mold having an inverted pattern of a fine concave and convex pattern to be imparted on a surface of a coating layer comprising the cross-linkable curable composition (S3);
cross-linking and curing the coating layer to form the first cross-linked cured resin layer (S4); and

removing an intermediate laminate comprising the first adhesive layer and the first cross-linked cured resin layer from the mold (S5).

1

Fig. 1

12
11

2

13
12
11

Fig. 2

3

14
12
11

Fig. 3

4

14
13
12
11

Fig. 4

Fig. 5A

Fig. 5B

<u>6A</u>

22

15
14
13
12
11

5A

21

Fig. 6A

<u>6B</u>

22

15
14
13
12
11

5A

21

Fig. 6B

## INTERNATIONAL SEARCH REPORT

| International application No. |
| --- |
| PCT/JP2019/037961 |

A. CLASSIFICATION OF SUBJECT MATTER

Int.Cl. B32B27/30(2006.01)i, B32B3/30(2006.01)i, B32B7/023(2019.01)i, B32B27/22(2006.01)i, C03C27/12(2006.01)i, G02B27/01(2006.01)i

According to International Patent Classification (IPC) or to both national classification and IPC

B. FIELDS SEARCHED

Minimum documentation searched (classification system followed by classification symbols)

Int.Cl. B32B1/00-43/00, C03C27/12, G02B27/01

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2015-8285 A (KURARAY CO., LTD.) 15 January 2015, claims, background art, paragraphs [0018], [0060], [0064]-[0092], drawings (Family: none) | 1-2, 4-7, 9-11, 14, 16-23 |
| Y | | 3 |
| Y | JP 6-926 A (SEKISUI CHEMICAL CO., LTD.) 11 January 1994, claims, paragraph [0065] & US 5340654 A, column 9, lines 3-8 & EP 566890 A1 & DE 69322432 C & KR 10-1993-0021375 A & CA 2092395 A1 | 3 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 December 2019 (04.12.2019) | 17 December 2019 (17.12.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/037961 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2017/170259 A1 (KURARAY CO., LTD.) 05 October 2017, entire text & EP 3438065 A1, whole document & CN 108883983 A & KR 10-2018-0128036 A | 1-25 |
| A | JP 7-69690 A (DAINIPPON PRINTING CO., LTD.) 14 March 1995, entire text (Family: none) | 1-25 |
| A | WO 2017/191826 A1 (KURARAY CO., LTD.) 09 November 2017, entire text (Family: none) | 1-25 |
| A | JP 2011-88358 A (KURARAY CO., LTD.) 06 May 2011, entire text (Family: none) | 1-25 |
| A | WO 2017/176452 A1 (SOLUTIA INC.) 12 October 2017, whole document & JP 2019-518691 A & US 2017/0285339 A1 & EP 3439872 A1 & CN 108883610 A & KR 10-2018-0132796 A | 1-25 |
| A | JP 60-191816 A (NISSAN MOTOR CO., LTD.) 30 September 1985, examples (Family: none) | 1-25 |
| A | JP 2016-539905 A (KURARAY EUROPE GMBH) 22 December 2016, entire text & US 2016/0288459 A1, whole document & WO 2015/078993 A1 & EP 2878443 A1 & EP 3074221 A1 & EP 3281784 A1 & CN 105722679 A & JP 2018-48078 A | 1-25 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S60191816 A
- JP 2013171099 A
- WO 2015078993 A
- JP 2016539905 W
- EP 1527107 A
- WO 2004063231 A
- EP 1606325 A
- WO 2003020776 A
- EP 1235683 A
- JP 2018181056 A